# EUROPEAN PATENT SPECIFICATION

(11) **EP 3 985 612 B1**
(45) Date of publication and mention of the grant of the patent: **31.07.2024**
(21) Application number: 20823436.9
(22) Date of filing: 09.06.2020
(51) Int. Cl.: G11B 27/10

(54) **METHOD AND DEVICE FOR RENDERING ANIMATION, COMPUTER READABLE STORAGE MEDIUM, AND COMPUTER APPARATUS**
VERFAHREN UND VORRICHTUNG ZUR WIEDERGABE VON ANIMATION, COMPUTERLESBARES SPEICHERMEDIUM UND COMPUTERVORRICHTUNG
PROCÉDÉ ET DISPOSITIF DE RENDU D'ANIMATION, SUPPORT DE STOCKAGE LISIBLE PAR ORDINATEUR, ET APPAREIL INFORMATIQUE

(30) Priority: 11.06.2019 CN 201910501994
(43) Date of publication of application: 20.04.2022
(73) Proprietor: Tencent Technology (Shenzhen) Company Limited, Shenzhen, Guangdong, 518057 (CN)
(72) Inventor: CHEN, Haizhong, Shenzhen, GUANGDONG 518057 (CN); CHEN, Renjian, Shenzhen, GUANGDONG 518057 (CN)
(74) Representative: Eisenführ Speiser
(86) International application number: PCT/CN2020/095013
(87) International publication number: WO 2020/248951

(56) References cited:
- CN-A- 103 810 738
- CN-A- 109 389 661
- US-A1- 2010 073 379
- US-A1- 2016 275 108
- US-A1- 2019 073 742
- US-B1- 7 786 999

## Description

### RELATED APPLICATION

The present disclosure claims priority to Chinese Patent Application No. 201910501994.8, entitled "METHOD AND APPARATUS FOR RENDERING ANIMATION, COMPUTER-READABLE STORAGE MEDIUM, AND COMPUTER DEVICE" and filed on June 11, 2019 with China National Intellectual Property Agency.

### FIELD OF THE TECHNOLOGY

The present disclosure relates to the technical field of image processing, and in particular, to a method and an apparatus for rendering an animation, a computer-readable storage medium, and a computer device.

### BACKGROUND OF THE DISCLOSURE

Animations are more and more widely applied with continuous development of image processing technology and network technology. For example, an animation provided on a page of a client can improve a visual effect of the page. When shooting a video via a client, a user may select an animation for video synthesis, such that the synthesized video demonstrates an animation effect desired by the user.

When playing an animation, it is necessary to decode a corresponding animation file, so as to obtain animation data of key frames. Afterwards, animation data of a to-be-played frame is computed according to the animation data of the key frame, and then such animation data is rendered and displayed on a screen. In a conventional rendering solution, before being rendered to obtain the rendered data, the animation data of a current to-be-played frame needs to be computed based on the animation data of the key frame. Thereby, a calculation amount is increased in the rendering, which may affect fluency of playing the animation

Document CN109389661A, ALIBABA HEALTH INFORMATION TECH LIMITED, 26 February 2019, discloses animation playback by rendering animation frames from a play queue of animation frames stored in a memory, cached.

### SUMMARY

A method for rendering an animation, a computer-readable storage medium, and a computer device are provided according to various embodiments of the present disclosure.

The invention is set out in the appended claims. Embodiments according to the invention are solely the specific combinations of features as defined in the claims.

Details of one or more embodiments of the present disclosure are provided in the following drawings and description. Other features and advantages of the present disclosure would be apparent with reference to the specification, the drawings, and the claims.

### BRIEF DESCRIPTION OF THE DRAWINGS

Figure 1 is a diagram of an application environment of a method for rendering an animation according to an embodiment;
Figure 2 is a schematic flowchart of a method for rendering an animation according to an embodiment;
Figure 3 is a schematic flowchart of steps of decoding an animation file to obtain animation drawing data and determining an interval for the animation drawing data according to an embodiment;
Figure 4 is a schematic flowchart of a step of calculating an interval for animation drawing data of an animation layer according to an embodiment;
Figure 5 is a schematic diagram of calculating a "still" interval for an animation layer according to an embodiment;
Figure 6 is a schematic flowchart of a step of performing animation rendering according to an initial animation attribute value and obtained animation attribute values according to an embodiment;
Figure 7 is a schematic flowchart of a step of performing animation rendering according to initial group drawing data and obtained group drawing data according to an embodiment;
Figure 8 is a schematic flowchart of a step of performing rendering based on shared animation drawing data when the same animation is played in multiple applications according to an embodiment;
Figure 9 is a schematic flowchart of steps of performing rendering to obtain animation rendering data and caching the animation rendering data according to an embodiment;
Figure 10 is a schematic flowchart of steps of off-screen rendering according to an embodiment;
Figure 11 is a schematic flowchart of steps of storing animation rendering data of vector graphics of the largest size when multiple animation layers include the same vector graphics according to an embodiment;
Figure 12 is a schematic flowchart of steps of calculating an animation region of a pre-composed attribute group according to an embodiment;
Figure 13 is a schematic diagram of an animation region of a pre-composed attribute group according to an embodiment;
Figure 14 is a structural diagram of Transform2D according to an embodiment;
Figure 15 is a schematic flowchart of a method for delimiting a "still" interval according to an embodiment;
Figure 16 is a schematic diagram of time consumption of rendering when activating all caching policies according to an embodiment;
Figure 17 is a schematic diagram of time consumption of rendering when deactivating rendering-data caching according to an embodiment;
Figure 18 is a schematic diagram of time consumption of rendering when deactivating drawing-data caching according to an embodiment;
Figure 19 is a schematic diagram of time consumption of rendering when deactivating all caching policies according to an embodiment;
Figure 20 is a structural block diagram of an apparatus for rendering an animation according to an embodiment;
Figure 21 is a structural block diagram of an apparatus for rendering an animation according to another embodiment; and
Figure 22 is a structural block diagram of a computer device according to an embodiment.

### DESCRIPTION OF EMBODIMENTS

In order to make the objectives, technical solutions, and advantages of the present disclosure clearer, hereinafter the present disclosure is further illustrated in detail with reference to the drawings and the embodiments. It is to be understood that specific embodiments described herein are merely intended to explain the present disclosure, instead of limiting the present disclosure.

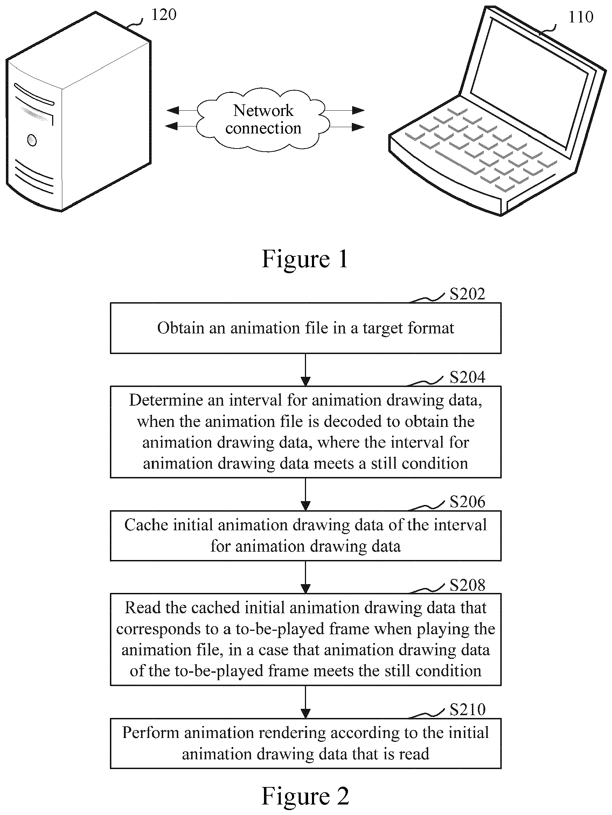

Figure 1 is a diagram of an application environment of a method for rendering an animation according to an embodiment. Referring to Figure 1, the method is applied to an animation rendering system. The animation rendering system includes a terminal 110 and a server 120. The terminal 110 and the server 120 are connected via a network. The terminal 110 may be specifically a desktop terminal or a mobile terminal. The mobile terminal may be at least one of a mobile phone, a tablet computer, a notebook computer, or the like. The server 120 may be implemented as an independent server, or a server cluster that includes multiple servers.

As shown in Figure 2, a method for rendering an animation is provided according to an embodiment. In this embodiment, it is mainly taken as an example that the method is applied to the terminal 110 in Figure 1. Reference is made to Figure 2. In a specific embodiment, the method includes following steps S202 to S210.

In step S202, an animation file in a target format is obtained.

The target format may be the PAG format, with a file extension of "PAG" (or "pag"). An animation file in the PAG format may be obtained by integrating resources, such as text and images, into a single file. In addition, an animation file in the PAG format adopts a technique of dynamic bit storage with a quite high compression ratio. Moreover, the animation file in the PAG format is capable of cross-platform running. During the running, text content, font size, and font style in an animation can be arbitrarily and dynamically modified, and image content in the animation can be replaced, while an effect of the animation is maintained. Thereby, a diversified effect of customized animation content can be achieved.

In an embodiment, the terminal obtains the animation file in the target format in response to detecting a trigger event. The trigger event may be an operation instruction that is externally inputted, such as an instruction for playing an animation.

In an embodiment, he method may further include a following step before S202. After the animation file is made through a client of Adobe After Effects (AE), the animation file is exported in the target format via a PAG exporting plug-in installed in the AE client. The animation file may be encoded in a target coding manner when exporting the animation file in the target format. The target coding manner may be any one of Huffman coding, Shannon coding, run length code (RLC), Lenpel-Ziv & Welch (LZW) coding, arithmetic coding, predictive coding, transform coding, or quantization coding.

The installed PAG exporting plug-in is developed for the AE client, and for exporting in the target format. There may be at least three optional manners for exporting an animation file is exported from the AE client. For example, a selection may be made among vector composition exporting, sequence frame exporting, and video composition exporting. A specific PAG exporting plug-in installed in the AE client is necessary for the animation file in the target format.

Animation rendering may be applied to playing animations in a specific application scenario. Therefore, in S202, a manner for obtaining the animation file may be classified according to the application scenario of playing the animation.

A first scenario is playing an animation on a display page of a client.

In an embodiment, when launching a client, the terminal obtains the animation file in the target format from an animation library that is locally stored. Alternatively, the terminal transmits an instruction for obtaining an animation to the server, and receives the animation file in the target format in response to such instruction. Thereby, when the client is launched, a launching animation is played on a launching screen according to the animation file. The launching screen of the client is a type of the display page.

For example, an animation effect is added to the launching screen of the client. When launching the client, an animation file in the PAG format that is to be played on the launching screen may be obtained, such that an animation is played on the launching screen according to such animation file. Hence, the animation effect is presented on the launching screen, improving user experience.

In an embodiment, when the display page is scrolled to a target position after launching the client, the terminal obtains the animation file in the target format from an animation library that is locally stored. Alternatively, the terminal transmits an instruction of obtaining an animation to the server, and receives the animation file in the target format in response to such instruction. Thereby, the animation is played according to the animation file, on the display page that is scrolled to the target position.

For example, when the display page of the client is scrolled to the bottom, an animation file in the PAG format that is to be played at the bottom may be obtained. Therefore, a user may view an animation when scrolling the display page to the bottom. An animation effect is presented on the display page of the client, which may improve user experience.

A second scenario is displaying an animation at a corresponding position in a video or an image, when the video is played on the client or the image is displayed on the client.

When a video is shot or an image is captured, the video or image includes an animation that is provided, in a case that the animation is selected in a camera interface. In an embodiment, when a video needs to be played, the terminal chooses a designated video identifier according to a selection instruction that is inputted, obtains a corresponding Internet Protocol (IP) address according to the video identifier, and obtains a video file and a corresponding animation file according to the IP address. Thereby, the animation is played at a set position in the video that is being played.

In step S204, an interval for animation drawing data is determined when the animation file is decoded to obtain the animation drawing data, where the interval for animation drawing data meets a still condition.

The animation drawing data may be called drawing data of a PAG animation. The animation drawing data may be configured to describe or draw content of the PAG animation. Animation rendering may be performed according to the animation drawing data, and afterwards the corresponding to-be-displayed content of the PAG animation may be obtained after being displayed on a screen. The animation rendering is performed on a piece of transient animation drawing data in the interval, and then the rendered data is displayed on the screen, such that a frame of animation may be obtained. Hence, the transient animation drawing data is for establishing an animation frame, and corresponds to such animation frame. The interval that meets the still condition may be an interval in which the animation drawing data does not change with respect to time.

The interval for animation drawing data that meets the still condition may be understood as an interval in which the animation drawing data is still, that is, an interval in which an animation layer is still. When a quantity of the animation layer included in the animation file is one, the interval for the animation drawing data is an interval in which the animation file is still. When a quantity of the animation layer included in the animation file is greater than one, an overlapping part among the intervals for all pieces of the animation drawing data is the interval in which the animation file is still. In subsequent embodiments, unless otherwise illustrated, the interval for the animation drawing data refers to an interval that is of the drawing data and meets the still condition.

The still condition may refer to that there is no change within a time period. For example, in a macroscopic view, the still condition may refer to that an animation does not change within a time period when being played (that is, the animation keeps still within such time period). In a microscopic view, the still condition may refer to that the animation drawing data that forms animation frames does not change within a time period. Further, pieces of group drawing data constitute the animation drawing data, and hence the still condition may refer to that the pieces of the group drawing data do not change within a time period. Further, animation attribute values constitute the group drawing data, and hence the still condition may refer to that the animation attribute values do not change within a time period. The animation attribute values may be a color, a size, a font, or a motion parameter of text in the animation. The animation attribute value may change with respect to time. For example, the animation attribute value may be linearly correlated with time, that is, proportionally increased or decreased with respect to time. For another example, the animation attribute value may be in Bezier correlation with time, that is, changes along a Bezier curve with respect to time. For another example, the animation attribute value may be in a "Hold" type with respect to time, that is, does not change within a time period and meets the still condition.

The animation attribute value is a parameter value of a timeline attribute. The animation attribute value of the timeline attribute may correlate with time.

Each animation frame in the animation file may be formed by superposing multiple animation layers (that is, layers of an animation). The animation layer may be formed by animation attribute groups ("group") of smaller granularity. There are a total of six types of the animation attribute groups, i.e. a transform ("transform"), an intra-layer mask ("mask"), an inter-layer mask ("trackMatte"), a style of a layer ("layerStyle"), an effect ("effect"), and content ("content"). An animation attribute group of a content type includes an element that can be drawn, such as an image, text, and a shape. Therefore, such animation attribute group is an attribute group of drawable elements. Content included in the animation attribute group may be described by a corresponding animation attribute value. That is, the animation attribute value is an element in the animation attribute group. Shape description during graphics rendering is taken as an example. A shape in an animation may be described by two types of animation attribute values, that is, path information ("path") and paint information ("paint").

In an embodiment, after the animation file in the target format is obtained, the terminal may load and decode the animation file via the client, to obtain an animation file object. Then, the terminal traverses a list of animation attribute values in the animation file object to obtain the animation attribute values, and combines the animation attribute values according to the corresponding animation attribute group to obtain a piece of the group drawing data. The terminal combines pieces of the group drawing data according to the corresponding animation layer, to obtain the animation drawing data.

In an embodiment, in order to determine the interval for animation drawing data that meets the still condition, the terminal may first find an interval for an animation attribute value, and the interval for the animation attribute value meets the still condition. The animation drawing data includes group drawing data, and the group drawing data includes the animation attribute value. Therefore, the terminal first calculates an overlapping part among the intervals for the animation attribute values in an animation attribute group, determines such overlapping part as an interval for the group drawing data that meets the still condition, and then calculates the interval for the animation drawing data that meets the still condition through a bubble-sort algorithm.

In step S206, initial animation drawing data of the interval for animation drawing data is cached.

Animation drawing data in the interval for animation drawing data does not change with respect to time, and therefore all pieces of transient animation drawing data in such interval are identical. In addition, a piece of transient animation drawing data in the interval for animation drawing data corresponds to an animation frame. Therefore, when caching the animation drawing data, the terminal only needs to cache the initial animation drawing data of the interval for animation drawing data. An image of such animation frame can be rendered based on the initial animation drawing data.

In an embodiment, after determining the interval for animation drawing data that meets the still condition, the terminal obtains the initial animation drawing data in such interval, and then caches the obtained initial animation drawing data. The initial animation drawing data is a piece of transient animation drawing data.

For example, it is assumed that there are a total of 100 frames in an animation file A, and the animation in the first ten frames is still. That is, animation drawing data of the first ten frames meets the still condition. In such case, the terminal may obtain animation drawing data of the first frame in the first ten frames, and then caches such animation drawing data.

In step S208, when playing the animation file, the cached initial animation drawing data that corresponds to to-be-played frames is read, in a case that animation drawing data of the to-be-played frames meets the still condition.

In an embodiment, the terminal monitors a play progress of the animation file in real time when playing the animation file. In a case that current to-be-played frames are still, that is, the animation drawing data of the to-be-played frames meets the still condition, the initial animation drawing data corresponding to the to-be-played frames is read from a cache.

For example, it is assumed that there are a total of 100 frames in the animation file A, and animation drawing data of first ten frames meets the still condition. During the play of the animation file A, the terminal only needs to read animation drawing data of the first frame from cache when the second frame is to be played after the first frame, because the animation drawing data of the first ten frames meets the still condition.

In an embodiment, a corresponding identifier may be attributed to each interval for animation drawing data. When playing the animation file, the initial animation drawing data corresponding to the to-be-played frames is read from a cache according to the attributed identifier, in a case that the animation drawing data of the to-be-played frames meets the still condition.

In step S210, animation rendering is performed according to the initial animation drawing data that is read.

In an embodiment, the terminal invokes a rendering tool to render the read initial animation drawing data, so as to obtain visual animation rendering data. Then, the animation rendering data is displayed on a screen.

For example, the terminal invokes a Web graphics library (WebGL), an open graphics library for embedded systems (OpenGL ES), or a 2.0 version of the OpenGL ES, in order to render the read initial animation drawing data. Then, animation rendering data obtained through rendering on a screen.

In an example, there are a total of 100 frames in an animation file A, and the first ten frames are still. During caching of animation drawing data, it is only necessary to cache animation drawing data of the first frame. When playing the second frame to the tenth frame, he terminal only needs to obtain and render the cached animation drawing data of the first frame, to obtain animation rendering data of the second frame to the tenth frame. Then, the animation rendering data is displayed on a screen to obtain the second frame to the tenth frame of an animation.

In the foregoing embodiment, the initial animation drawing data of the interval for animation drawing data that meets the still condition is cached. When animation frames with an attribute value meeting the still condition is to be played, the initial animation drawing data corresponding to these to-be-played frames is directly obtained from cache, and it is not necessary to parse the animation file again to obtain animation drawing data of the to-be-played frames. A calculation amount is reduced, and a time consumption of the rendering is reduced, smoothing play of the animation.

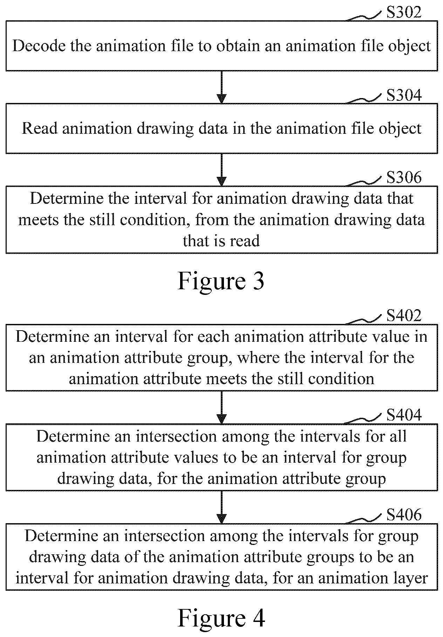

In a specific embodiment as shown in Figure 3, the step S204 may include following steps S302 to S306.

In step S302, the animation file is decoded to obtain an animation file object.

The animation file object includes various types of data related to animation frames, for example, the animation attribute value that is configured to describe the animation and of smallest granularity.

In an embodiment, when the animation file needs to be played, the terminal parses the animation file in the target format through the client, to obtain binary animation data. The terminal reads the binary animation data bitwise, to obtain an animation file object.

In an embodiment, when the same animation is played by more than one application in the client, the terminal decodes only one animation file to obtain the animation file object, and caches the animation file object. The animation file object may be read from the cached animation file, when the more than one application plays such animation.

For example, when the same animation is to be played, the client only needs to load the same animation file to an internal memory, and decode the animation file to obtain an animation file object. The cached animation file object may be reused, when multiple copies of the same animation are simultaneously played.

In an embodiment, when the same animation is played by more than one application in the client, the terminal only decodes one animation file to obtain an animation file object, and caches the initial animation drawing data, which is in the interval for animation drawing data that meets the still condition, read from the animation file object. The initial animation drawing data corresponding to to-be-played frames in each application may be read from the cache, when the more than one application plays such animation.

In step S304, animation drawing data in the animation file object is read.

In an embodiment, the terminal traverses a list of animation attribute values in the animation file object to obtain the animation attribute values, and combines the animation attribute values according to a corresponding animation attribute group, so as to obtain a piece of group drawing data. The terminal combines pieces of the group drawing data according to a corresponding animation layer, to obtain animation drawing data.

In step S306, the interval for animation drawing data that meets the still condition is determined from the animation drawing data that is read.

In an embodiment, in order to determine the interval for animation drawing data that meets the still condition, the terminal may first find an interval for an animation attribute value, and the interval for the animation attribute value meets the still condition. The animation drawing data includes group drawing data, and the group drawing data includes the animation attribute value. Therefore, the terminal first calculates an overlapping part among the intervals for the animation attribute values in an animation attribute group, determines such overlapping part as an interval for the group drawing data that meets the still condition, and then calculates the interval for the animation drawing data that meets the still condition through a bubble-sort algorithm.

In an embodiment, in a case that the animation file is played in more than one application, the terminal determines a play progress corresponding to each application. In a case that animation drawing data of to-be-played frames corresponding to the play progress meets the still condition, read is the cached initial animation drawing data that corresponds to the play progress and is shared by the more than one application.

In the foregoing embodiment, the animation file is decoded to obtain the animation file object, the animation drawing data in the animation file object is read, and then the interval for animation drawing data that meets the still condition is found from the animation file object, so as to cache the initial animation drawing data in such interval. Therefore, when a corresponding animation frame of which an attribute value meets the still condition is to be played, the initial animation drawing data corresponding to the to-be-played frames is directly obtained from the cache. A calculation amount is reduced, and a time consumption of the rendering is reduced, thereby smoothing play of the animation.

In a specific embodiment as shown in Figure 4, the animation file includes at least one animation layer, each animation layer includes at least two animation attribute groups, and each animation attribute group includes at least two animation attribute values. The step S204 may include following steps S402 to S406.

In step S402, an interval for each animation attribute value in an animation attribute group is determined, where the interval for each animation attribute meets the still condition.

There are a total of six types of animation attribute groups, including "transform", "mask", "trackMatte", "layerStyle", "effect", and "content". The animation attribute values are elements in the animation attribute group. The "mask" may be drawn based on the path information and a mask mode. Therefore, the path information and the mask mode are animation attribute values of the "mask". The animation attribute value is a value correlating with time. As an example, the animation attribute value is proportionally increased or decreased with respect to time. As another example, the animation attribute value changes along a Bezier curve with respect to time. As another example, the animation attribute value does not change within a time period.

The interval for an animation attribute value that meets the still condition may be understood as a "still" interval of the animation attribute value.

In an embodiment, the terminal searches the animation attribute group for an animation attribute value that does not change within a time period, and such time period may serve as the interval for the animation attribute value that meets the still condition. The time period may be calibrated in a real unit of time, or may be calibrated in frames.

In step S404, an overlapping part among the intervals for all animation attribute values serves as an interval for group drawing data, for the animation attribute group.

The interval for group drawing data may be understood as an interval in which the group drawing data is still, that is, an interval in which the animation attribute group is still.

In an embodiment, the terminal calculates the overlapping part among the intervals for all animation attribute values, determines such overlapping part as the interval for group drawing data for the animation attribute group. Then, the terminal performs step S406, that is, calculates an interval for the animation layer through a bubble-sort algorithm.

In an embodiment, in a case that there is no overlapping part among the intervals for the animation attribute values, an initial animation attribute value of each interval for each animation attribute value is cached. No overlapping part among the intervals for all animation attribute values indicates that at least one animation attribute value in the animation attribute group changes with time. Hence, the animation attribute group changes with time, and does not meet the still condition (that is, there is no interval in which the animation attribute group is still). Still, at least one animation attribute value in the animation attribute group meets the still condition. Thereby, an interval for the animation attribute value that meets the still condition is found, and an initial animation attribute value of such is cached.

In an embodiment, an animation attribute group may include at least two drawable elements, in a case that the animation attribute group is an attribute group of drawable elements. Each drawable element may include at least two animation attribute values. In such case, the method further includes a following step. The terminal determines the overlapping part among the intervals for these animation attribute values as an element interval for a drawable element, and calculates an overlapping part among the element intervals for these drawable elements. The step S404 may specifically include a following step. For the animation attribute group, the overlapping part among the element intervals serves as the interval for group drawing data.

There are six types of animation attribute groups, including "transform", "mask", "trackMatte", "layerStyle", "effect", and "content". The animation attribute group of the content type is an indispensable part of the animation layer, and represents drawable elements of the animation layer, such as "shape", "text", "solid", "PreCompose", and "image". Other group types are represents processing on the content, such as translation, scaling, masking, or adding a filter effect. Due to diversity of content, the caching needs to be performed for specific drawable elements.

In step S406, an overlapping part among the intervals for group drawing data serves as the interval for animation drawing data, of an animation layer.

The interval of animation drawing data may be understood as an interval in which the animation drawing data is still, that is, an interval in which the animation layer is still.

In an embodiment, the terminal calculates an overlapping part among the intervals for group drawing data, and determines such overlapping part as the interval for animation drawing data of the animation layer.

The animation file is composed by at least one animation layer, and one animation layer corresponds to one piece of animation drawing data. The animation drawing data is composed of at least one piece of group drawing data, and the animation drawing data may be rendered and then displayed on a screen to obtain a corresponding animation.

In an embodiment, in a case that there is no overlapping part among the intervals for group drawing data, initial group drawing data of each interval for group drawing data is cached. No overlapping part among the intervals for group drawing data indicates that at least one piece of group drawing data in the animation layer changes with time. Hence, the animation layer changes with time, and the animation drawing data does not meet the still condition. Still, at least one piece of group drawing data meet in the animation drawing data meets the still condition. Then, an interval for group drawing data that meets the still condition is found, and the initial group drawing data of such interval is cached.

In an embodiment, in a case that the quantity of the animation layer included in the animation file is one, the terminal determines the interval for animation drawing data as an interval in which the animation is still. In a case that the quantity of the animation layers included in the animation file is larger than one, the terminal calculates an overlapping part among the intervals for animation drawing data of all animation layers, and determines such overlapping part as an interval in which the animation is still.

When the animation file includes multiple animation layers and there is an interval for animation drawing data meeting the still condition, an image or text in the corresponding animation layer does not change (that is, keeps still) during such interval. When the animation file includes multiple animation layers and there is an interval in which the animation is still, all images or text in the animation do not change (that is, keeps still) during such interval.

In an embodiment, the animation file may further includes a pre-composed attribute group besides the animation layer(s). In such case, the pre-composed attribute group may be regarded as an animation sub-file. The animation sub-file may include at least one animation layer and/or a nested pre-composed attribute subgroup. Reference may be made to solutions in the foregoing embodiments, when calculating intervals in which an animation layer, an animation attribute group, or an animation attribute value in the pre-composed attribute group is still.

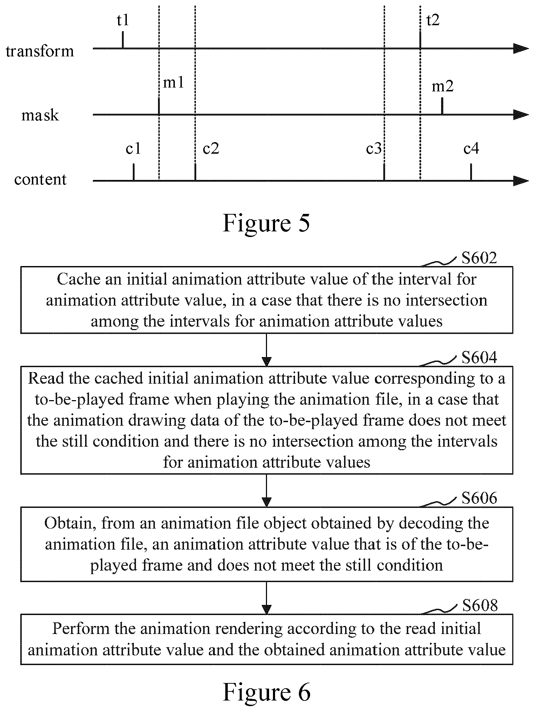

In an example as shown in Figure 5, an animation layer of the animation file includes three groups, which are "transform", "mask", and "content" respectively. [tl,t2] indicates an interval in which the "transform" is still, that is, the animation layer is subject to no transformation (such as translation, scaling, and rotation). [m1,m2] indicates an interval in which the "mask" is still, that is, the animation layer keeps using the same mask and the mask does not change. [c1,c2] and [c3,c4] indicate intervals in which the "content" is still, that is, the animation layer applies the same text and the same image, respectively. The text does not change within [c1,c2], and the image does not change within [c3,c4]. t1, t2, m1, m2, c1, c2, c3, and, c4 may be calibrated in frames. For example, t1 may indicate the first frame of the animation, m1 may indicate the third frame of the animation, and t2 may indicate the tenth frame of the animation.

The "content" is still in intervals [c1,c2] and [c3,c4]. When the animation file is played, the terminal only needs to parse text once at moment c1 and parse an image once at moment c3, and then caches and marks the text and the image that are obtained through the parsing. When the animation file is played, the terminal does not need to parse text of a frame c in the interval of [c1,c2] again, in a case that the frame c needs to be drawn. The terminal can obtain group drawing data of the frame c1 directly from a cache, and then render text based on the group drawing data of the frame c1. The rendered text is exactly the text for the frame c.

Only the group "content" is considered in the above scenario. Generally, an animation layer usually includes multiple groups. For example, an animation layer only includes three groups, "transform", "mask", and "content", and an interval in which the animation layer is still is an overlapping part among an interval in which the "transform" is still, an interval in which the "mask" is still, and an interval in which the "content" is still. As shown in Figure 5, there may be two intervals in which the animation layer is still, that is, [m1,c2] and [c3,t2]. Specific reference may be made to intervals delimited by dashed lines in Figure 5.

In the foregoing embodiment, the intervals for animation attribute values that meet the still condition are first determined, and then the interval for animation drawing data is calculated through the bubble-sort algorithm, such that the initial animation drawing data of the interval for animation drawing data can be cached. Thereby, when animation frames of which attribute values meet the still condition are to be played, the initial animation drawing data corresponding to these to-be-played frames is directly obtained from a cache. A calculation amount is reduced, and a time consumption of the rendering is reduced, thereby smoothing play of the animation.

In an embodiment as shown in Figure 6, the method further includes following steps S602 to S608.

In step S602, an initial animation attribute value of the interval for animation attribute value is cached, in a case that there is no overlapping part among the intervals for animation attribute values.

An interval for an animation attribute value may be understood as an interval in which the animation attribute value is still. No overlapping part among the intervals for the animation attribute values indicates that at least one animation attribute value in the animation attribute group changes with time. Hence, the animation attribute group changes with time, that is, there is no interval in which the animation attribute group is still. Still, at least one animation attribute value in the animation attribute group meets the still condition. An interval for such animation attribute value that meets the still condition is found, and the initial animation attribute value of such interval is cached.

In step S604, when playing the animation file, in a case that the animation drawing data of the to-be-played frames does not meet the still condition and there is no overlapping part among the intervals for animation attribute values, the cached initial animation attribute value corresponding to the to-be-played frames is read.

The interval of animation drawing data may be understood as an interval in which the animation drawing data is still, that is, an interval in which the animation layer is still. When playing the animation file, the animation drawing data of the to-be-played frames not meeting the still condition and no overlapping part among the intervals for animation attribute values indicates that the animation drawing data of the to-be-played frames does not hit a corresponding "still" interval, and group drawing data of the to-be-played frames does not hit a corresponding "still" interval likewise.

In an embodiment, when playing the animation file, the step S208 is performed in a case the animation drawing data of the to-be-played frames hits a "still" interval. In a case that the animation drawing data of the to-be-played frames does not hit a "still" interval, the terminal continues to search in a level of smaller granularity (that is, group drawing data) in the animation drawing data, and check whether the group drawing data of the to-be-played frames hits a corresponding "still" interval. In a case the group drawing data of the to-be-played frames hits the corresponding "still" interval, initial group drawing data corresponding to the to-be-played frames is obtained from cache. Then, other group drawing data of the to-be-played frames that is in a "non-still" interval is further obtained by parsing the animation file object. Thereby, the terminal can perform animation rendering according to the obtained initial group drawing data and the group drawing data obtained through the parsing.

In an embodiment, in a case that the animation drawing data of the to-be-played frames does not hit a corresponding "still" interval and the group drawing data of the to-be-played frames does not hit a corresponding "still" interval likewise, the terminal continues to search in smaller granularity (that is, animation attribute values) of the group drawing data, and checks whether an animation attribute value of the to-be-played frames hit a corresponding "still" interval. In a case that an animation attribute values of the to-be-played frames hit a corresponding "still" interval, an initial animation attribute value corresponding to the to-be-played frames is obtained from the cache, and then the step S606 is performed.

Due to existence of the "still" interval, all animation layers need to be traversed when a frame is to be played. In a case that current to-be-played frames hit an interval in which an animation layer is still, data of all frames in the animation layer is identical through such "still" interval, and hence corresponding initial animation drawing data may be directly obtained from a cache. In a case that the current to-be-played frames do not hit an interval in which the animation layer is still, all groups of the animation layer are further traversed. In a case that the current to-be-played frames hit an interval in which a group is still, the terminal directly uses the initial group drawing data in such interval for such group. In addition, the terminal further parses the animation file object to obtain other group drawing data that is of the to-be-played frames and in a "non-still" interval. In a case that the current to-be-played frames do not hit interval in which a group is still, the terminal traverses all animation attribute values of such group. In a case that the current to-be-played frames hit an interval in which an animation attribute value is still, the terminal directly uses an initial animation attribute value in such interval for such animation attribute value. The step S606 is further performed.

In step S606, an animation attribute value that is of the to-be-played frames and does not meet the still condition is obtained from an animation file object, where the animation file object is obtained by decoding the animation file.

In an embodiment, when the initial animation attribute value corresponding to the to-be-played frames is read, the terminal further parses the animation file object to obtain the animation attribute value that is of the to-be-played frames and in a "non-still" interval. Thereby, the terminal may perform animation rendering according to the obtained initial animation attribute value and the animation attribute value obtained through the parsing.

In step S608, the animation rendering is performed according to the read initial animation attribute value and the obtained animation attribute value.

The animation drawing data of the to-be-played frames may be formed by animation attribute value(s) in the "still" interval and animation attribute value(s) in the "non-still" interval. In order to obtain the animation attribute value(s) in the "still" interval, the initial animation attribute value(s) corresponding to the to-be-played frames may be directly read from the cache, and it is not necessary to parse the animation file object.

In an embodiment, the terminal converts the read initial animation attribute value and the obtained animation attribute values into animation drawing data, and performs animation rendering according to the animation drawing data.

In the foregoing embodiment, when there is no interval in which either the animation layer or the animation attribute group is still, the initial animation attribute values of the intervals in which animation attribute values are still are cached. In a case the to-be-played frames hit the interval in which an animation attribute value is still, the initial animation attribute value corresponding to the to-be-played frames is read from the cache, and it is not necessary to parse the animation file object to obtain such animation attribute value. A calculation amount is reduced, and a time consumption of the rendering is reduced, thereby smoothing play of the animation.

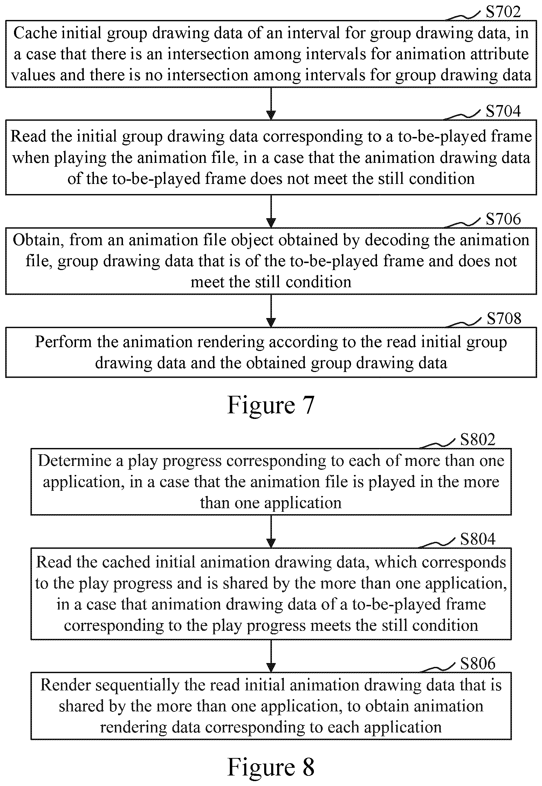

In an embodiment as shown in Figure 7, the method further includes following steps S702 to S708.

In step S702, initial group drawing data of an interval for group drawing data is cached, in a case that there is an overlapping part among the intervals for animation attribute values and there is no overlapping part among the intervals for group drawing data.

An interval for an animation attribute value may be understood as an interval in which the animation attribute value is still. The overlapping part among the intervals for animation attribute values indicates that all animation attribute values in an animation attribute group do not change with time. Therefore, there is an interval in which the animation attribute group is still. In a case that there is no interval in which the animation layer is still, the terminal caches the initial group drawing data of the interval for group drawing data.

In step S704, when playing the animation file, the initial group drawing data corresponding to the to-be-played frames is read, in a case that the animation drawing data of the to-be-played frames does not meet the still condition.

The interval of animation drawing data may be understood as an interval in which the animation drawing data is still, that is, an interval in which the animation layer is still. When playing the animation file, the animation drawing data of the to-be-played frames not meeting the still condition and the overlapping part among the intervals for animation attribute values indicates that the animation drawing data of the to-be-played frames does not hit a corresponding "still" interval, and at least a part of group drawing data of the to-be-played frames hits a corresponding "still" interval.

In an embodiment, when playing the animation file, the step S208 is performed in a case that the animation drawing data of the to-be-played frames hits a "still" interval. In a case that the animation drawing data of the to-be-played frames does not hit a "still" interval, the terminal continues to search in smaller granularity (that is, group drawing data) of the animation drawing data, and checks whether a piece of group drawing data of the to-be-played frames hits a corresponding "still" interval. In a case that a piece of group drawing data of the to-be-played frames hits a corresponding "still" interval, the initial group drawing data corresponding to the to-be-played frames is obtained from cache. Then, step S706 is performed.

In step S706, group drawing data that is of the to-be-played frames and does not meet the still condition is obtained from an animation file object, where the animation file object is obtained by decoding the animation file.

In an embodiment, while the initial group drawing data corresponding to the to-be-played frames is read, the terminal further passes the animation file object to obtain group drawing data that is of the to-be-played frames and in a "non-still" interval. Thereby, the terminal may perform animation rendering according to the obtained initial group drawing data and the group drawing data obtained through the parsing.

In step S708, the animation rendering is performed according to the read initial group drawing data and the obtained group drawing data.

The animation drawing data of the to-be-played frames may be composed by group drawing data in the "still" interval and group drawing data in the "non-still" interval. In order to obtain the group drawing data in the "still" interval, the initial group drawing data corresponding to the to-be-played frames may be directly read from the cache, and it is not necessary to parse the animation file object.

In an embodiment, the terminal converts the read initial group drawing data and the obtained group drawing data into animation drawing data, and performs the animation rendering according to the animation drawing data.

In the foregoing embodiment, when there is no interval in which the animation layer is still and there is an interval in which the animation attribute group is still, the initial group drawing data of the interval in which the piece of group drawing data is still is cached. When the to-be-played frames hit the interval for group drawing data, the initial group drawing data corresponding to the to-be-played frames is read from the cache, and it is not necessary to parse the animation file object to acquire the group drawing data in the "still" interval. A calculation amount is reduced, and a time consumption of the rendering is reduced, thereby smoothing play of the animation.

In a specific embodiment as shown in Figure 8, the step S208 may include following steps S802 to S806.

In step S802, in a case that the animation file is played in more than one application, a play progress corresponding to each application is determined.

The animation file played in more than one application may be refer to a same animation required to be played at multiple positions in the client. For example, a video player of the client plays a video carrying an animation, and the animation also needs to be played at a position on a display page outside the video player (for example, when the video player is not in a full-screen mode, the video player is fixed at an upper position of the display screen, and the display page is scrolled to the bottom).

In an embodiment, in a case that there is more than one application plays the same animation in the client, the terminal merely decodes the same animation file to obtain the animation file object, and caches the animation file object. When more than one application plays the same animation, an animation file object may be read from the cached animation file object.

For example, when the same animation is to be played, the client only needs to load the same animation file into an internal memory and decode the animation file to obtain an animation file object. The cached animation file object may be reused when multiple same animations are simultaneously played.

In another embodiment, in a case that there is more than one application playing the same animation in the client, the terminal merely decodes the same animation file to obtain an animation file object, and caches initial animation drawing data, which is read from the animation file object and is of the interval for animation drawing data that meets the still condition. During the play, the cached initial animation drawing data may be shared by multiple applications. When more than one application plays the same animation, the terminal may read the initial animation drawing data corresponding to a to-be-played frame of each application from the cache.

In another embodiment, in a case that there is more than one application playing the same animation in the client, the terminal merely decodes the same animation file to obtain an animation file object. In a case that the animation drawing data read from the animation file object does not meet the still condition, it is determined whether group drawing data of an animation attribute group meets the still condition. In a case that the group drawing data of the animation attribute group meets the still condition, initial group drawing data of the interval for group drawing data meeting the still condition is cached, and the cached initial group drawing data may be shared by multiple applications during the play. When more than one application plays the same animation, the terminal may read the initial group drawing data corresponding to a to-be-played frame of each application from the cache.

In another embodiment, in a case that there is more than one application playing the same animation in the client, the terminal merely decodes the same animation file to obtain an animation file object. In a case that the animation drawing data read from the animation file object does not meet the still condition, and group drawing data of an animation attribute group does not meet the still condition likewise, it is determined whether animation attribute values meet the still condition. In a case that an animation attribute value meet the still condition, an initial animation attribute value of the interval for the animation attribute value meeting the still condition is cached, and the cached initial animation attribute value may be shared by multiple applications during the play. When more than one application plays the same animation, the terminal may read the initial animation attribute value corresponding to a to-be-played frame of each application from the cache.

In step S804, in a case that animation drawing data of a to-be-played frame corresponding to the play progress meets the still condition, the cached initial animation drawing data, corresponding to the play progress and shared by the more than one application, is read.

The animation drawing data, of the to-be-played frame corresponding to the play progress, meeting the still condition refers to that there is an interval in which such animation drawing data is still.

In an embodiment, in a case that multiple applications plays the same animation, the terminal records a play progress of the animation being played in each application, and then determines according to the play progress whether the animation drawing data of the corresponding to-be-played frames hits a "still" interval. In case of hitting an interval in which the animation drawing data is still, the cached initial animation drawing data corresponding to the play progress and shared by the more than one application is read. In case of not hitting an interval in which the animation drawing data is still, the terminal traverses pieces of group drawing data that is in the animation layer and configured to constitute the animation drawing data. In case of hitting an interval in which a piece of group drawing data is still, the terminal uses initial group drawing data of such interval directly. In case of not hitting an interval in which a piece of group drawing data is still, the terminal traverses animation attribute values that are in the animation attribute group and configured to constitute the piece of the group drawing data. In case of hitting an interval in which an animation attribute value is still, the terminal uses initial animation attribute value in such interval directly.

In step S806, the read initial animation drawing data that is shared by the more than one application is sequentially rendered, to obtain animation rendering data corresponding to each application.

In an embodiment, in a case that there is no interval in which either the animation drawing data or the group drawing data is still, and there is an interval in which the animation attribute value is still, the terminal reads the initial animation attribute value shared by the more than one application in one aspect, and obtains animation attribute values in "non-still" intervals by parsing the shared animation file object in another aspect. The terminal converts the read initial animation attribute value and the animation attribute values obtained through the parsing into animation drawing data, and performs rendering.

In an embodiment, in a case that there is no interval in which the animation drawing data is still, and there is an interval in which a piece of group drawing data is still, the terminal reads the initial group drawing data shared by the more than one application in one aspect, and obtains pieces of group drawing data in "non-still" intervals by parsing the shared animation file object in another aspect. The terminal synthesizes the read initial group drawing data and the group drawing data obtained through the parsing into animation drawing data, and performs rendering.

In the foregoing embodiment, in a case that multiple applications in the client plays the same animation, the multiple applications share the animation drawing data obtained by parsing the same animation file, and the initial animation drawing data is cached. Therefore, a caching space is reduced in one aspect, and a calculation amount in the parsing is reduced in another aspect. When the animation drawing data of each to-be-played frame meets the still condition, the initial animation drawing data corresponding to said to-be-played frame is obtained from the cache, and it is not necessary to parse the animation file object to obtain the animation drawing data in a "still" interval. A calculation amount is reduced, and a time consumption of the rendering is reduced, thereby smoothing play of the animation.

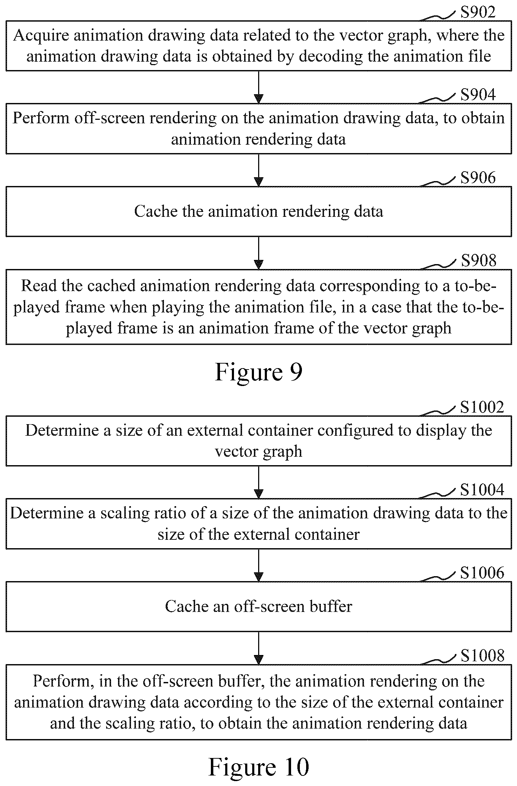

In an embodiment, besides the animation drawing data, the animation rendering data may further be cached. The animation file includes vector graphics. As shown in Figure 9, the method may further include following steps S902 to S908.

In step S902, animation drawing data related to the vector graphics is obtained, where the animation drawing data is obtained by decoding the animation file.

The vector graphics is also called an object-oriented image. The vector graphics utilizes geometric primitives based on mathematical equations, such as points, lines, or polygons, to represent an image, and hence the image is not distorted during enlargement, shrinkage, or rotation. Text (such as graphic text) in an animation also belongs to the vector graphics.

The terminal caches the animation drawing data, the group drawing data, or the animation attribute value of the vector graphics, which ensures direct acquisition of transient description data of the animation. Further calculation is necessary when converting such description data into animation rendering data that can be displayed on a screen. Particularly, when the vector graphics is described through complex path information, coordinate information of each point and information describing each path among the points need to be parsed from the path information during the rendering. Afterwards, the path information could be converted into the vector graphics. Similar process applies to text information. Only path information and paint information of the text are cached in the animation drawing data. There are a large calculation amount and large time consumption each time these pieces of information are rendered. Therefore, when playing the animation, it is necessary to first render the animation drawing data to acquire the animation rendering data, and then cache the animation rendering data. The corresponding animation rendering data is directly read from a cache when required.

In an embodiment, when it is determined that the animation file includes vector graphics, the terminal obtains the animation drawing data that is related to the vector graphics and obtained by decoding the animation file. Alternatively, in a case that the animation drawing data of the vector graphics meets the still condition, the terminal determines an interval of animation drawing data meeting the still condition, and obtains initial animation drawing data of the interval of animation drawing data.

In step S904, off-screen rendering is performed on the animation drawing data, so as to obtain animation rendering data.

The animation rendering data may be texture of an image.

In an embodiment, S904 may specifically include a following step. The terminal performs the off-screen rendering on the animation drawing data that is obtained through the decoding, to obtain the animation rendering data. Alternatively, the terminal performs the off-screen rendering on the initial animation drawing data in the interval of animation drawing data, to obtain the animation rendering data.

In step S906, the animation rendering data is cached.

In an embodiment, before caching the animation rendering data, the terminal determines a size of the animation rendering data, and compresses the animation rendering data while ensuring the animation quality in a case that the size is greater than a preset size threshold, so as to reduce the size of the animation rendering data. Afterwards, the terminal caches the compressed animation rendering data, and hence a caching space is reduced.

In step S908, when playing the animation file, in a case that a to-be-played frame is an animation frame of the vector graphics, the cached animation rendering data corresponding to the to-be-played frame is read.

In an embodiment, the animation rendering data corresponding to the to-be-played frame is read from the cache during the play, in a case that the to-be-played frame is an animation frame of the vector graphics. Alternatively, animation rendering data, which corresponds to the to-be-played frame and is obtained by rendering the initial animation drawing data of the interval of animation drawing data, is read from cache during the play, in a case that the to-be-played frame is an animation frame of vector graphics and animation drawing data of the to-be-played frames meets the still condition.

In the foregoing embodiment, animation drawing data of the vector graphics is pre-rendered to obtain the animation rendering data, and then the animation rendering data is cached. In a case that the to-be-played frame is an animation frame of the vector graphics, the animation rendering data of the to-be-played frame is read from the cache during the play. A time consumption of converting the animation drawing data into the animation rendering data is avoided, thereby effectively reducing a time consumption of the rendering, and improving fluency of playing the animation.

In a specific embodiment as shown in Figure 10, the step S904 may include following steps S1002 to S1008.

In step S1002, a size of an external container configured to display the vector graphics is determined.

The external container may be an external container view configured to display the vector graphics. For example, an animation is played on a mobile phone. An image container corresponding to a region, which is on the mobile phone and in which the vector graphics is displayed, may called the external container.

An actual size of the displayed vector graphics depends on the size of the external container, because a size of the animation rendering data has been determined when the animation rendering data is cached. In order to ensure definition of the animation, a size of the animation rendering data may utilize a maximum scaling ratio when the animation rendering data is cached. Thereby, when the cached animation rendering data is applied to a scenario with a smaller size, the animation rendering data may be compressed rather than stretched, effectively ensuring the definition of the animation.

In an embodiment, in a design process, the terminal may preset sizes of the external container configured to display the vector graphics, according to sizes of the animation in different terminals. When playing the animation, the terminal may determine a corresponding size of the external container from the preset sizes, according to a size of the terminal.

In step S1004, a scaling ratio of a size of the animation drawing data to the size of the external container is determined.

In a specific embodiment, the step S1004 may include following steps. A first size ratio of an internal container carrying animation frames to the external container is determined. A second size ratio of an animation layer to the internal container is determined. A third size ratio of animation drawing data in an attribute group of drawable elements to the animation layer is determined. The scaling ratio is determined according to the first size ratio, the second size ratio, and the third size ratio.

For example, when calculating the scaling ratio, the terminal first obtains the first size ratio S1 of the internal container carrying animation frames to the external container. Then, the terminal traverses all layers, and obtains the second size ratio S2 of each layer to the internal container. The terminal further traverses all child nodes in a tree structure until finding the "content", and obtains an original width and an original height of the "content" node and the third size ratio S3 of the "content" node to the layer node. Finally, the terminal calculates the scaling ratio between the "content" and the external container by multiplying S1, S2, and S3. The node tree includes the external container, the internal container, the animation layer(s), the attribute group(s) of drawable elements, and animation drawing data in the attribute group(s) of drawable elements.

In an embodiment, in a case that a ratio corresponding to a node in a node tree is changed, the changed scaling ratio is obtained. The node tree includes the external container, the internal container, the animation layer(s), the attribute group(s) of drawable elements, and animation drawing data in the attribute group(s) of drawable elements. The size of the cached animation rendering data is adjusted according to the scaling ratio. Alternatively, an inputted scaling ratio is obtained, and the size of the cached animation rendering data is adjusted according to the inputted scaling ratio.

For example, when playing the animation, the terminal places a PAG view (PAGView) for displaying the animation at another node, such as a leaf node at a bottom of the tree structure. When sizes of these parent nodes change, the PAGView is notified, and the scaling ratio is applied to caching the animation rendering data. Hence, it may be ensured that the cached animation rendering data is optimal, while the definition of the animation is ensured.

In addition, using maximum scaling ratio may still occupy a large space in an internal memory, and it may still be ensured that the definition of the animation does not affect an effect of the animation when the cached animation rendering data is further compressed. In such case, another scaling ratio may be set based on the maximum scaling ratio, to reduce the occupied caching space.

In step S1006, an off-screen buffer is created.

In step S1008, animation rendering is performed in the off-screen buffer on the animation drawing data according to the size of the external container and the scaling ratio, to obtain the animation rendering data.

In an embodiment, in order to synchronize a display with an animation controller, the terminal transmits a horizontal synchronization signal when an electron gun is ready to scan a new row, and a refresh frequency of the display is a frequency at which the synchronization signal is generated. Then, the processor calculates parameters such as an animation frame or a width and a height of the animation, and transmits the calculated parameter values to a graphics card for rendering, to obtain animation rendering data. The animation rendering data rendered by the graphics card is inputted into the off-screen buffer. Finally, the animation controller reads the animation rendering data in the off-screen buffer according to the synchronization signal row-wise, and transmits the animation rendering data to the display through digital-to-analog conversion, so as to display the animation rendering data.

A context environment needs to be switched during the entire off-screen rendering. First, an on-screen (current screen) environment is switched to an off-screen environment. After the off-screen rendering is completed, the animation rendering data in the off-screen buffer is displayed on the screen, and the terminal needs to switch the context environment from off-Screen to on-screen.

In the foregoing embodiment, the animation drawing data of the vector graphics is pre-rendered, to prevent the time consumption of converting the animation drawing data into the animation rendering data during the play. Thereby, the time consumption of the rendering is effectively reduced, improving the fluency of playing the animation.

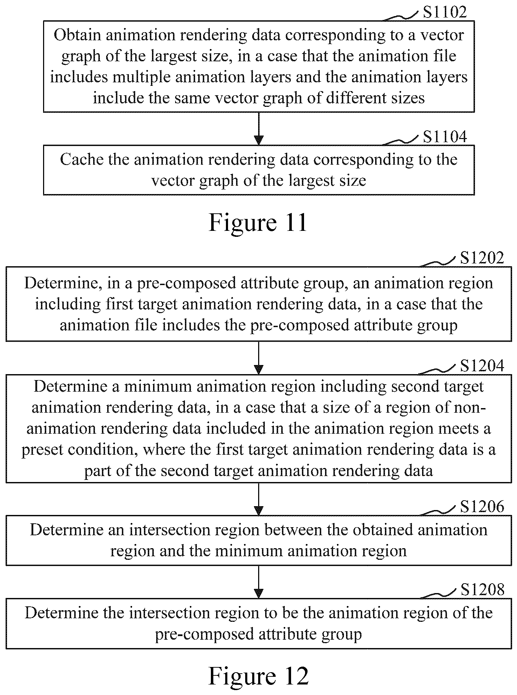

In an embodiment as shown in Figure 11, the method further includes following steps S1102 and S1104.

In step S 1102, in a case that the animation file includes multiple animation layers, and the animation layers include the same vector graphics of different sizes, animation rendering data corresponding to the vector graphics of the largest size is obtained.

In an embodiment, the animation file may include a pre-composed attribute group in which multiple animation layers are synthesized, and the animation layers may include the same vector graphics of different sizes. In such case, the terminal obtains the animation rendering data corresponding to the vector graphics of the largest size.

In a specific embodiment, the step S906 may include step S1104. In step S1104, the animation rendering data corresponding to the vector graphics of the largest size is cached.

For example, an animation includes three animation layers, and a same image appears in each animation layer. The caching is performed only once, since all the three animation layers include such image. Scaling in each animation layer needs to be considered, and the maximum scaling ratio needs to be selected, in order to determine the size of the animation rendering data. Hence, during the caching, the size of the cached animation rendering data is based on the maximum scaling ratio. When the animation rendering data is drawn in a smaller container or a smaller layer, the cached animation rendering data may be compressed, and thereby the definition does not deteriorate.

In the foregoing embodiment, the animation rendering data corresponding to the vector graphics of the largest size is cached, in a case that the same vector graphics appears in multiple layers. In one aspect, it can be prevented that three copies of animation rendering data are cached, thereby reducing the occupied caching space. In another aspect, the animation rendering data of the largest size is cached to prevent that the image definition is reduced due to the vector graphics being stretched during the play.

In a specific embodiment as shown in Figure 12, the step S906 may include following steps S1202 to S1208.

In step S1202, in a case that the animation file includes a pre-composed attribute group, an animation region including first target animation rendering data is determined in the pre-composed attribute group.

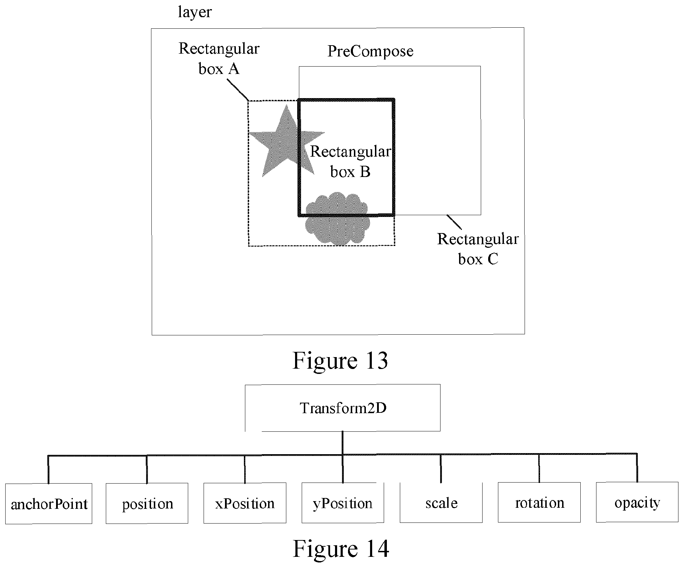

The first target animation rendering data is a part of the animation rendering data. For example, as shown in Figure 13, the first target animation rendering data is a part of data at the pentagram and the cloud.

The animation rendering data may be image texture with a size. Therefore, content included in the animation region may be a part of the animation rendering data. In a case that a large area in the animation region is non-animation rendering data, the animation region needs to be optimized to avoid potential additional calculation that is required during the rendering.

In step S 1204, in a case that a size of a region of non-animation rendering data included in the animation region meets a preset condition, a minimum animation region including second target animation rendering data is determined. The first target animation rendering data is a part of the second target animation rendering data.

The second target animation rendering data includes all animation rendering data, and hence the first target animation rendering data is a part of the second target animation rendering data. The region of non-animation rendering data may be a blank region or an invalid region.

Since the second target animation rendering data includes all animation rendering data, the second target animation rendering data may be framed by a rectangular box, and the rectangular box is a minimum rectangular box that is possible to frame the second target animation rendering data. The minimum rectangular box serves as the minimum animation region, as indicated by the dashed-line box in Figure 13.

In step S1206, an overlapping part region between the obtained animation region and the minimum animation region is determined.

In step S 1208, the overlapping part region serves as the animation region of the pre-composed attribute group.

In an embodiment, when the overlapping part region between the animation region and the minimum animation region is determined, the terminal determines the overlapping part region as the animation region of the pre-composed attribute group for display.

In an example, when the animation region of the pre-composed attribute group includes an excessive invalid or blank region, the terminal optimizes a boundary of the pre-composed attribute group. That is, the terminal calculates to obtain a minimum rectangular region including all animation rendering data, and then determines an overlapping part among such rectangular region and a rectangular boundary of the pre-composed attribute group, so as to obtain an actual boundary of the pre-composed attribute group.

As shown in Figure 13, an animation file merely includes a layer and a pre-composed attribute group. A boundary of the pre-composed attribute group is the rectangular box C indicated by the thin line, and an actual content region of the pre-composed attribute group is a part of the pentagram and the cloud. Other parts of the pentagram and the cloud are located outside the rectangular box. The rectangular box may be optimized during the rendering, because most content in the box is blank. The optimization may include following steps. First, a minimum rectangle including a region of actual content is calculated, and the rectangular box A indicated by the dashed-line is obtained in Figure 13. Afterwards, an overlapping part between the rectangular box A and the boundary (that is, the rectangular box C) of the pre-composed attribute group is determined, and the rectangular box B indicated by the bold line is obtained. The rectangular frame B is the actual animation region that needs to be rendered and displayed.

In the foregoing embodiment, the animation region of the pre-composed animation attribute group needs to be re-determined in case of including a large invalid region, so as to ensure that the animation region include the animation rendering data while the invalid region is as small as possible. Therefore, potential additional calculation required during the rendering is avoided, and it is prevented that the invalid region is scanned when displaying on a screen, reducing a time consumption of an on-screen process.

A conventional solution for rendering an animation is taken as an example. For example, Lottie animation is rendered. All information of a Lottie animation is stored in a JavaScript object notation (JSON) format, and a process of playing the Lottie animation is as follows. An animation file is first loaded into an internal memory, and then the animation file is parsed according to the JSON format. Transient animation information is obtained when a moment is positioned during the playing. That is, content that needs to be displayed in a transient frame is found from the parsed JSON file, and the content may be an image, text, or the like. Finally, it is necessary to convert the to-be-displayed transient content into rendering data, which can be drawn and displayed on a screen. For vector graphics, it is necessary to calculate information of each point on path information and draw a path during the rendering. Additionally, paint information and path information are read and converted into text.

In the conventional solution, data of a same animation file in the internal memory is not reused for the same animation. In a case that multiple copies of the same animation are simultaneously played on a screen, the same animation file is loaded for multiple times. In addition, a piece of transient data of the animation is parsed and then converted into to-be-drawn data, without considering an interval in which the drawing data is still. Hence, initial drawing data in the "still" interval is not reused when the data in the internal memory is converted into the drawing data. Finally, a time consumption of converting the drawing data of the vector graphics into the rendering data is also not considered in such solution. For a complex vector graphics, the rendering takes a long period, each time converting the drawing data into the rendering data.

In view of the foregoing issues, an animation rendering solution of a "three-level caching" is provided according to embodiments of the present disclosure. The solution includes animation-file caching, drawing-data caching, and rendering-data caching. Hereinafter the three types of caching are illustrated

### I. Animation-file caching

An animation file is decoded and cached in an internal memory. Only one copy of a file object obtained through the decoding is stored for the animation file. In a case that the animation needs to be played in multiple scenarios, the file object is reused and the animation file is not repeatedly read, avoiding multiple decoding processes. Thereby, a lot of unnecessary overheads are saved, especially in the internal memory. For example, after a client is launched, there is a universal loading animation that is used in all scenarios for loading applications. In such case, even if description data of the animation file occupies few space of the internal memory, there would be excessive overheads occupying the internal memory, in a case that dozens of applications require the animation and load the animation in each loading process.

In addition, a time consumption of the decoding may be also reduced. The animation file is decoded only once for multiple identical loading animations, which consumes less time. Additional time consumption is avoided in comparison with decoding the animation file into the internal memory for each animation.

### II. Drawing-data caching

An interval in which the animation is still is delimited according to characteristics of a PAG animation. Drawing data is cached for such interval. Hereinafter delimitation of such "still" interval is described in specific embodiments, before illustrating the drawing-data caching is described.

### (1) Delimitation of "still" interval

An intuitive understanding of the "still" interval is as follows. For example, a total duration of a PAG animation is 2s, and it is assumed that there are 24 frames per second. There may be no change within a time period ranging from 1s to 1.5s, that is, the animation may be still from 1s to 1.5s. In such case, the "still" interval for the animation is [24,36], where the unit is in frames.

Each animation frame in an animation file may be composed by multiple superimposing layers, the layer is composed by groups which are smaller, and the group is described by using a series of attributes, which include a timeline attribute and a fixed attribute. An interval of a "Hold" type may be found for the timeline attribute, namely, the "still" interval for the timeline attribute is still. For the fixed attribute, the entire time period is the "still" interval. The timeline attribute "bubbles up" after the "still" interval thereof is found. In a case that a group includes several timeline attributes, and there is an overlapping part among the "still" intervals for the timeline attributes, the corresponding attribute values of the group in such overlapping part does not change. Such overlapping part is the "still" interval for the group. Similarly, the group further "bubbles up", and an overlapping part among the "still" intervals for multiple groups may be found. Such overlapping part is the "still" interval for a layer. An overlapping part among the "still" intervals for multiple layers is the "still" interval for composition of vectors. Thereby, the "still" interval for the entire animation can be obtained.

There are six types of the groups forming the layer, namely, "transform", "mask", "trackMatte", "layerStyle", "effect", and "content". The "transform" is taken as an example. The transform" is formed by multiple key frames <Transform2D>, and each key frame is a record of information on translation, scaling, rotation, and/or changing opacity of a layer. The "transform" is stored in a PAG animation file. When the PAG animation file is parsed, an animation trajectory of the layer can be restored by obtaining these key frames. These key frames are eventually stored in a data structure of Transform2D. In practice, the Transform2D is described by using timeline attributes, which includes an anchor point ("anchorPoint"), a position ("position"), a location with respect to an x-axis ("xPosition"), a location with respect to a y-axis ("yPosition"), a scaling ratio ("scale"), rotation ("rotation"), and opacity ("opacity"), as shown in Figure 14. The "position", the "xPosition", and the "yPosition" describe translation information. The "anchorPoint" and the "scale" describe scaling information. The "anchorPoint" and the "rotation" describe rotation information. The "opacity" describes opacity information.

When the PAG animation file is parsed, a type of a group in of a layer may be the "transform", and an attribute value of a timeline attribute that describes information of the Transform2D may not change within several key frames. In such case, such frames could be appreciated as the "still" interval for such "transform". Determining whether an interval is the "still" interval may be eventually converted into searching a "Hold"-type interval for a timeline attribute. Similar discussions apply to the other groups. In order to obtain the "still" interval for a layer, which is a parent node above groups, an overlapping part among the "still" intervals for all groups in such layer is calculated.

The "still" interval may be directly calculated, or may be obtained by searching for a "non-still" interval. That is, in the latter manner, the "still" interval for the entire animation may be obtained by removing all "non-still" intervals that are found. A specific manner of obtaining the "still" interval by searching for the "non-still" interval may include following steps. First, the process starts from a root composition. The entire animation includes n frames, namely, from the first frame to the last frame of the animation (i.e. [1,n]). Afterwards, all layers or all sub-compositions are traversed, and all groups in each layer are traversed, to remove the "non-still" intervals within the group from [1,n]. Thereby, [1,n] is divided into multiple small intervals. The "still" interval for a layer is an overlapping part calculated among the "still" intervals for all groups in such layer. Similarly, an overlapping part among the "still" intervals for all layers is the "still" interval for a composition. In this way, bubble sort is performed layer by layer, and the "still" interval for the root composition (that is, the entire animation) is eventually obtained.

Reference is made to Figure 5, which is a schematic diagram of determining an overlapping part of the "still" intervals, t1, t2, m1, m2, c1, c2, c3, and c4 are calibrated in frames. Three groups of a layer in a composition are shown in Figure 5 with respect to an entire animation period. In the interval [t1,t2], the layer does not have any transformation, such as translation, scaling, or rotation. In the interval [m1,m2], the layer uses a same mask, and there is no change in the mask. In the intervals [c1,c2] and [c3,c4], the layer applies a piece of unchanged text and a piece of unchanged image, respectively.

Apparently, both [c1,c2] and [c3,c4] are "still" intervals for the "content" group. During the animation rendering, it is only necessary to parse the text once at the moment of c1 and parse the image once at moment c3 moment, and the text and image are stored in the internal memory and are labelled. In a case that a frame c within the interval [c1,c2] needs to be drawn when playing the animation, it is not necessary to parse again the text of the frame c, and the labelled cache may be searched by using c1. The text of the frame c1 is drawn, and is exactly identical to the text of the frame c.

Only the "content" group is considered in the above scenario. The "still" interval for a layer including multiple groups is an overlapping part among the "still" intervals for all the groups in such layer. As shown in Figure 5, in a case that the layer only includes the three groups, there are two "still" intervals, i.e. [m1,c2] and [c3,t2], for the layer.

It may be appreciated practical delimitation of the "still" interval is a process of bubble sort. First, the "Hold"-type intervals for timeline attributes are queried, an overlapping part thereof is determined to find the "still" interval for a group. Then, overlapping parts are determined layer by layer, until the "still" interval for a root composition, that is, the "still" interval for the entire animation, is obtained.

In summary, a process of delimiting the "still" interval is described by following steps S1502 to S1518.

In step S1502, the process starts from a root composition, and an initial "still" interval is from the first frame to the last frame.

In step S1504, it is determined Determine whether there is a sub-composition.

In step S1506, in a case that there is no sub-composition, a "still" interval of the root composition is calculated based on all layers, and then the process goes to step S1518.

In step S1508, in a case that there is a sub-composition, the process then starts from the sub-composition, and an initial "still" interval is from the first frame to the last frame for the sub-composition.

In step S 1510, it is determined whether there is a layer in the sub-composition.

In step S1512, in a case that there is a layer in the sub-composition, a "still" interval of each group in the layer is calculated.

In step S1514, an interval of a "Hold" type is selected for a timeline attribute describing the group, and then it is determined whether there is a layer in another sub-composition.

In step S1516, in a case that there is no layer in the sub-composition, a "still" interval of the sub-composition is calculated based on all groups.

In step S1518, a "still" interval of the root composition is calculated.

### (2) Caching of drawing data

The caching of drawing data caching refers to caching a part related to a PAG file (PAGFile) object. After the PAGFile object is obtained through decoding, all "still" intervals may be obtained through the aforementioned delimitation process. In addition, the PAGFile object may be parsed to obtain the initial animation drawing data of the "still" interval, and then the initial animation drawing data is cached. Only necessary drawing data is cached to reduce a size of a cache as much as possible. Different caching policies are applied to different layers, groups, and classifications of smaller granularity.

When a frame is being drawn, the PAG animation would jump to such frame, and all layers or pre-composed compositions are sequentially drawn. The pre-composed composition is essentially multiple layers or compositions that are nested, and hence eventually it is the layers that are drawn. Therefore, granularity of drawing may be further fractionized to drawing separate layers. A layer may include one or more of the six types of groups. Hereinafter the caching policy of each type of group is described.

### 1) "Content"

The "content" is an indispensable part of a layer, and represents a part including drawable elements, such as an image, text, and a shape. Most other groups represent processing on the "content", such as translation, scaling, masking, and adding a filter effect.

Elements that may be represented by the "content" may be basically following elements: "shape", "text", "solid", "PreCompose" and "image". Diversity of the "content" leads to caching for specific elements. Different data content is cached for the five elements.

The "shape" represents a shape, and may be a circle, a rectangle, a pentagram, and the other regular shapes, or may be an irregular shape. When rendering an image, only information of "path" and "paint" needs to be drawn to describe the shape, in order to draw a represented graphic completely. Here a customized data structure is cached for the "shape". Content of the customized data structure is shape painting ("ShapePaint"). The "ShapePaint" includes two attribute values, that is, "path" information and "paint" information.

The "text" represents text content, that is, text. For example, a row of prompt words is played in a scrolling manner in an animation, and such prompt words apply the "text". Information required for rendering the text is similar to that required for the "shape", that is, both the "path" information and the "paint" information are required. In addition, a font type of the text may be configured. For example, different fonts may be applied to an animation. Therefore, an attribute value for information on a type of font needs to be recorded.

The "solid" is a special type of the "shape", and represent a solid rectangle of a color. The rectangle may be described as a width, a height, and a filling color. Namely, three types of attribute values, i.e. the width, the height, the filling color, may be cached. The "solid" may be applied to many scenarios, such as a graphic in a simple vector animation, a layer serving as a mask, or a pre-composed mask.

The "image" represents an image. Specific pixel information of the image needs to be obtained in rendering, and hence the pixel information of the image is cached as an attribute value. In addition, a size, especially a width and a height, of a displayed image changes during scaling, and hence corresponding compression or stretching needs to be performed in the rendering. Therefore, an original width and an original height of the image also need to be cached as attribute values.

The "PreCompose" represents a pre-composition, which is composed of one or more layers, or additionally nested with another composition. In this embodiment, the "PreCompose" is applied to a sub-composition. Layers included in the "PreCompose" are traversed for caching of the "PreCompose", and then the caching is performed with a caching policy for the layers.

### 2) "Transform"

In practice, an animation includes variations along a timeline, and most of the variations are constituted by at least one of: translation, scaling, rotating, fade-in, or fade-out.

In a 2D space, the "transform" is applied to a rectangle. In case of translation, an initial position (recording x and y coordinates) of the rectangle may be determined, and then translation distances along the x-axis and the y-axis, namely, xPosition and yPosition (in quantities of floating points and recording distances) are recorded. The translated animation may be restored by using the three pieces of information: an x coordinate, a y coordinate, and a distance. In case of scaling, an anchor point ("anchorPoint") may be first determined, and scaling information is further added, to achieve complete representation. In case of rotating, an anchor point ("anchorPoint") may be first determined, and rotation information is further added, to achieve complete representation. In case of opacity variation of fading in or fading out, opacity information may be recorded.

In summary, any variation in the 2D space may be recorded by using few pieces of information. Information on translation, scaling, and rotating may be recorded through matrices ("Matrix"), and a variation in opacity may be recorded by using "opacity". The variation in the animation can be restored by using the above two types of information. Therefore, only the "Matrix" and the "opacity" need to be cached as attribute values in the caching.

### 3) "Mask"

When using a mask, two simple graphics are combined into a new graphic. Here the "Mask" represents a mask in a layer. During rendering, a mask is drawn by using "path" information and a mask mode. For example, the "path" information, that is, vertex information of a rectangle serving as a mask needs to recorded, so as to restore the rectangular mask. Therefore, the "path" information and the mask mode need to be cached.

The mask mode determines final display. For example, an "Add" mode represents that a mask is directly added for display, a "Subtract" mode represents a portion covered by the mask is subtracted, an "Intersect" mode represents that an overlapping part between an original graphic and a mask is obtained and displayed, and a "Difference" mode indicates that a non-overlapping portion of an original graphic and a mask is obtained and displayed.

### 4) "TrackMatte"

The "TrackMatte" is similar to the "Mask", and also serves as a mask. A difference between the "TrackMatte" and the "Mask" lies in that the "Mask" is a mask in a layer, while the "TrackMatte" is using a layer as a mask on another layer based on opacity and brightness. Similar to the "Mask", the "path" information and mode information need to be cached for the "TrackMatte".

A mode of the "TrackMatte" includes following types. An "Alpha" mode controls a display region according to an opaque region of a layer. An "AlphaInverted" mode controls a display region of a layer according to a transparent region of the layer. A "Luma" mode and a "LumaInverted" mode are similar to the "Alpha" and "AlphaInverted", and differ in that a condition for controlling the display region is brightness instead of opacity.

### 5) "layerStyle" and "effect"

The "layerStyle" and the "effect" are filters. The filter may be understood as processing pixels of an image to generate a customized effect. In the PAG animation, the "layerStyle" and the "effect" may be configured to support a projection effect, and depend on filter information when being implemented. For example, a projection image is drawn on an original image, and parameters of the projection image are calculated based on a color, a direction, and a distance of projection. Hence, filter information may be cached in rendering.

### III. Rendering-data caching

Drawing-data caching can ensure that a piece of transient data of vector graphics may be directly obtained in an animation. Calculation is further needed to convert the drawing data into rendering data that can be directly drawn. Particularly, coordinates of points in complex "path" information of vector graphics and path description information among the points need to be sequentially parsed in rendering, and then the "path" information is completed drawn into the vector graphics. The above process also applies to drawing data of text. Only the "path" information and "paint" information of the text are cached in the drawing-data caching. Every time such information is drawn, calculation and conversion consume time. Such time consumption may be reduced through rendering-data caching as follows. An off-screen buffer is created after the drawing data is obtained, then off-screen rendering is performed to obtain rendering data, the rendering data is cached, and the rendering data is directly from a cache when drawing is required. In this way, the time consumption of converting the drawing data into the rendering data is reduced.

Because the vector graphics can be arbitrarily scaled, a displayed size of the vector graphics depends on a size of an external display container view. A size of texture is determined when the rendering data is cached. Hence, a size of the texture may apply a maximum scaling ratio when caching the rendering data, so as to ensure definition of the final animation. Thereby, the rendering data may be compressed rather than stretched when the cached rendering data is applied to a smaller scenario, ensuring the definition of the animation. The scaling ratio is calculated as follows. First, a scaling ratio S1 related to the external view for carrying and displaying the animation is obtained. Then, all compositions and layers are sequentially traversed to obtain their respective scaling ratio S2. Afterwards, a scaling ratio of each node in a tree structure is found, until reaching a node of the "content", an original width and an original height of the "content" and a scaling ratio S3 of the "content" to a parent node thereof are obtained. Finally, a scaling ratio of the "content" to the display view is calculated by multiplying the scaling ratios S1, S2(s), and S3 at levels of the tree structure.

The "content" of a "PreCompose" type and an "image" type are different due to a nested structure. For example, an animation including the "PreCompose" type includes three layers, and a same image may appear in each layer. Since the images are same, it is only necessary to cache the image once. Scaling ratios at all positions where the image is used need to be considered, and the maximum scaling ratio is selected to obtain a caching size of the image. During the caching, a size of the cached texture follows a scenario corresponding to the maximum scaling ratio. When the texture is drawn into a smaller view, the cached image may be directly compressed to ensure definition of the image.

Moreover, a "setCacheScale" ("float scale") interface configured to set a size is provided for external settings. When displaying the animation, a PAGView for displaying the animation is usually placed in another container. In a case that a size of such parent container changes, the PAGView needs to be notified, and a scaling ratio is applied to the rendering-data caching. Thereby, it can be ensured that the cached rendering data is optimal while the definition does not deteriorate. In addition, the maximum scaling ratio may still occupy a large space of the internal memory, and the definition of the cached image may be still ensured and does not affect he animation effect when the image is further compressed. In such case, another scaling ratio may be configured on a basis of the maximum scaling ratio, in order to reduce a caching space.

Boundary measurement of the "PreCompose" may be optimized. A minimum rectangular region including all content is obtained through calculation, and an overlapping part between such rectangle and a rectangular boundary of the "PreCompose" is determined, to obtain an actual boundary of the "PreCompose". Figure 13 shows an animation including only one layer and one "PreCompose". A boundary of the "PreCompose" form a small rectangular box indicated by a thin line. A region of actual content is a part of the pentagram and the cloud, and another part of the pentagram and the cloud are located outside the rectangular box. During rendering, the rectangular box may be optimized due to most its inner part is blank. A manner of the optimization may be as follows. First, a minimum rectangular box including the actual content is calculated to obtain a rectangular box A indicated by a dashed line in Figure 13. Afterwards, an overlapping part between the rectangular box A and the boundary of the "PreCompose" is determined to obtain a rectangular box B indicated by a bold line. The rectangular box B is the actual region for display.

### IV. Comparison of rendering time

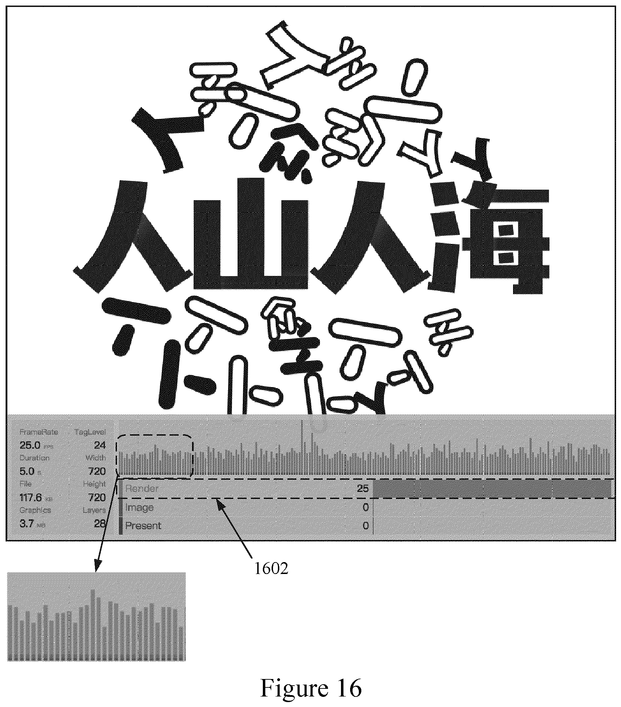

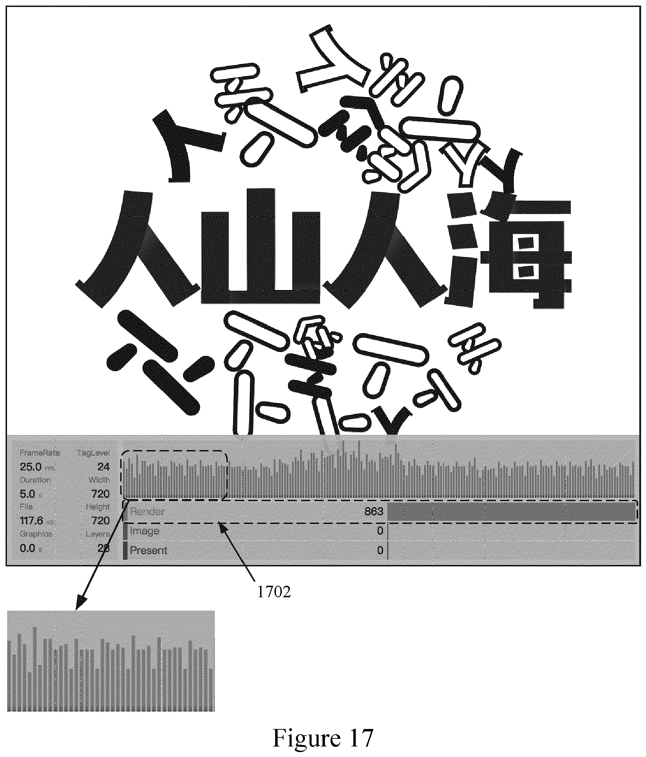

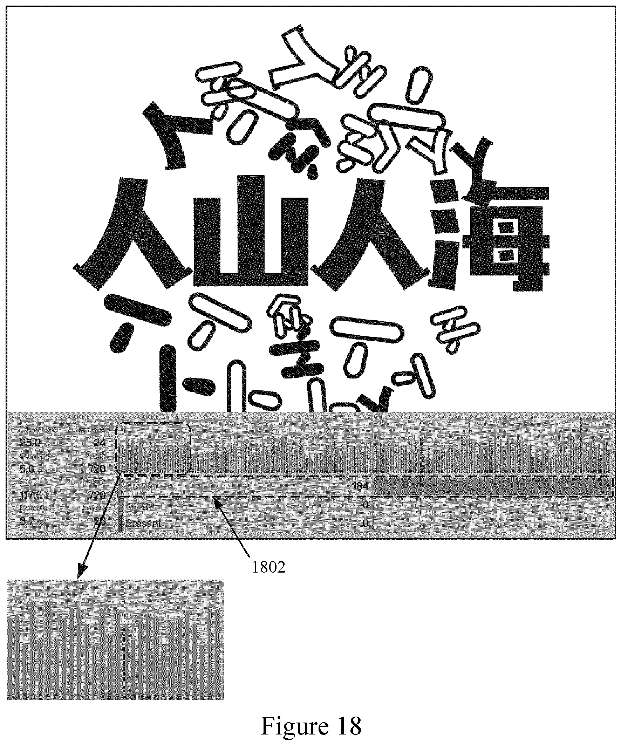

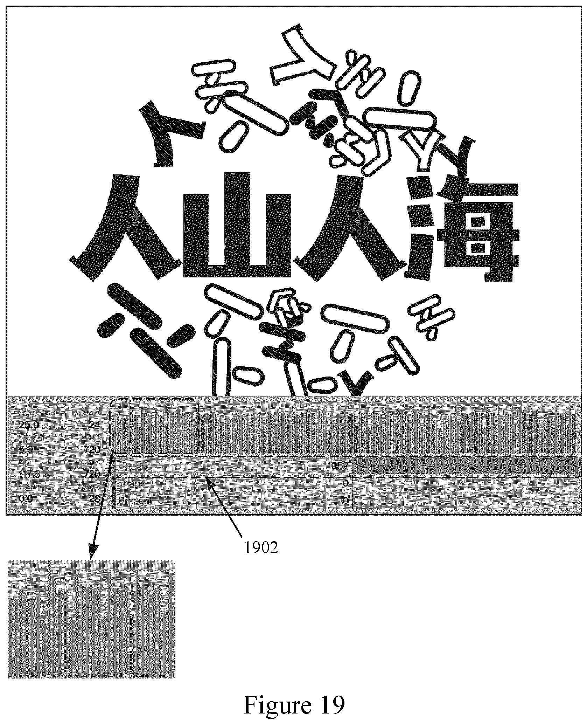

An animation previewer (PAGviewer) is used to visualize time consumption of rendering a PAG animation " 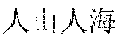 ". Figure 16 is a schematic diagram of time consumption of rendering when all caching policies are activated. Figure 17 is a schematic diagram of time consumption of rendering when rendering-data caching is deactivated. Figure 18 is a schematic diagram of time consumption of rendering when drawing-data caching is deactivated. Figure 19 is a schematic diagram of time consumption of rendering when no caching policy is activated.

It can be seen from Figure 16 to Figure 19 that the time consumption of rendering is minimum, i.e. only 25ms, when all caching policies are activated, as shown by a dashed box 1602 in Figure 16. The time consumption of rendering is maximum, i.e. 1052ms, when no caching policy is activated, as shown by a dashed-line 1902 in Figure 19. Hence, it can be seen from Figure 16 and Figure 19 that the time consumption of rendering decreased by two orders of magnitude when all caching policies are switched from being deactivated to being activated.

In addition, the time consumption of rendering is 863ms when the rendering-data caching is deactivated (that is, when using the drawing-data caching), as shown by a dashed box 1702 in Figure 17. The time consumption of rendering is 184ms when the drawing-data caching is deactivated (that is, using the rendering-data caching), as shown by a dashed box 1802 in Figure 18. The time consumption of rendering is different between using the drawing-data caching and the rendering-data caching. The drawing-data caching and rendering-data caching are two different caching policies applicable to different application scenarios, and thus have different functions. The above animation " 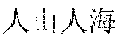 " is a scenario showing an excellent performance of applying the rendering-data caching in a case of a complex graphic.

### The foregoing embodiment may achieve the following beneficial effects.

1) Rendering time of an animation can be significantly shortened. With the method for rendering an animation according to embodiments of the present disclosure, the rendering time may be reduced by one or two orders of magnitude in comparison with a conventional method for rendering the animation. The reduction of the rendering time can smooth playing of the animation, and achieve a good playing effect even on a low-end mobile phone. Particularly, decoding time can be greatly reduced when multiple copies of a same animation are simultaneously played on a same page of a client.
2) Different caching policies are applied to different layers. Different rules are applied when calculating scaling ratios of the animation for an image and a pre-composed composition.

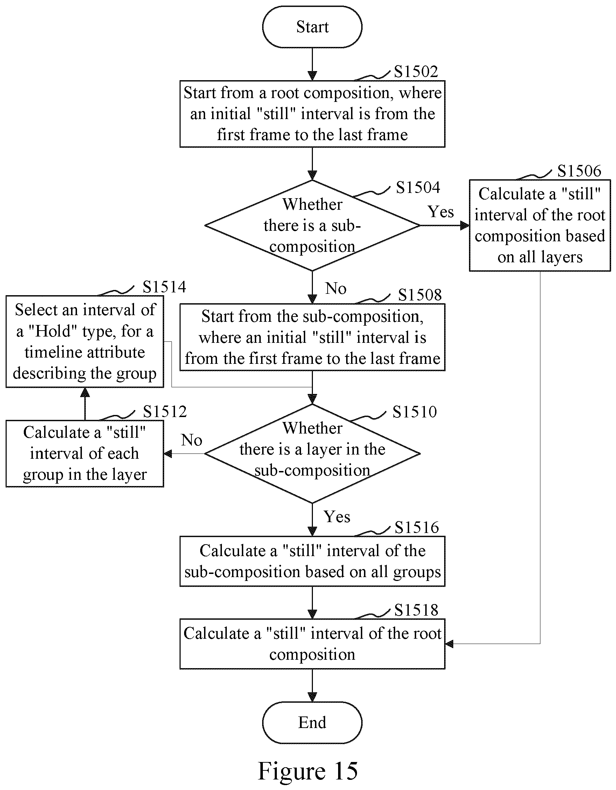

Figures 2 to 4, 6 to 12, and 15 are schematic flowcharts of a method for rendering an animation according to an embodiment. Although steps in flowcharts of Figures 2 to 4, 6 to 12, and 15 are displayed in sequences indicated by arrows, such steps are not necessarily performed in such sequence. Unless explicitly specified otherwise herein, the sequence of executing the steps is not strictly limited, and the steps may be performed in another sequence. Moreover, at least some of the steps in Figures 2 to 4, 6 to 12 may include multiple sub-steps or multiple stages. The sub-steps or stages are not necessarily performed at the same moment, but may be performed at different moments. The sub-steps or stages are not necessarily performed sequentially, but may be performed in turn or alternately with at least some of other steps, or with sub-steps or stages of another step.

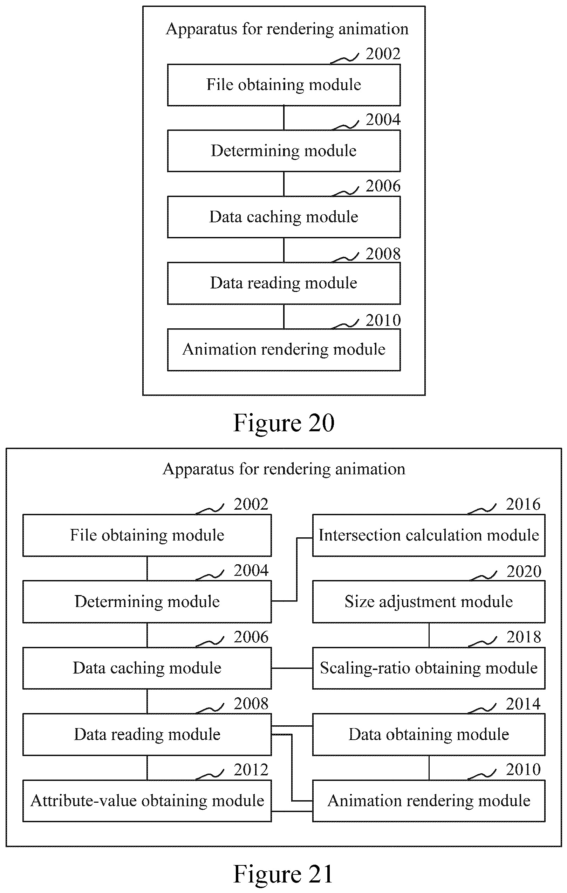

As shown in Figure 20, an apparatus for rendering an animation is provided according to an embodiment. The apparatus includes: a file obtaining module 2002, a determining module 2004, a data caching module 2006, and a data reading module 2008, and an animation rendering module 2010.

The file obtaining module 2002 is configured to obtain an animation file in a target format.

The determining module 2004 is configured to determine an interval for animation drawing data when the animation file is decoded to obtain the animation drawing data, where the interval for animation drawing data meets a still condition.

The data caching module 2006 is configured to cache initial animation drawing data of the interval for animation drawing data.

The data reading module 2008 is configured to read, when playing the animation file, the cached initial animation drawing data that corresponds to to-be-played frames, in a case that animation drawing data of the to-be-played frames meets the still condition.

The animation rendering module 2010 is configured to perform animation rendering according to the initial animation drawing data that is read.

In the foregoing embodiment, the initial animation drawing data of the interval for animation drawing data that meets the still condition is cached. When an animation frame with an attribute value meeting the still condition is to be played, the initial animation drawing data corresponding to these to-be-played frames is directly obtained from cache, and it is not necessary to parse the animation file again to obtain animation drawing data of the to-be-played frames. A calculation amount is reduced, and a time consumption of the rendering is reduced, smoothing play of the animation.

In an embodiment, the determining module 2004 is further configured to: decode the animation file to obtain an animation file object; read animation drawing data in the animation file object; and determine the interval for animation drawing data that meets the still condition, from the animation drawing data that is read.

In the foregoing embodiment, the animation file is decoded to obtain the animation file object, the animation drawing data in the animation file object is read, and then the interval for animation drawing data that meets the still condition is found from the animation file object, so as to cache the initial animation drawing data in such interval. Therefore, when a corresponding animation frame of which an attribute value meets the still condition is to be played, the initial animation drawing data corresponding to the to-be-played frames is directly obtained from the cache. A calculation amount is reduced, and a time consumption of the rendering is reduced, thereby smoothing play of the animation.

In an embodiment, the animation file includes at least one animation layer, each animation layer includes at least two animation attribute groups, and each animation attribute group includes at least two animation attribute values. The determining module 2004 is further configured to: determine an interval for each animation attribute value in an animation attribute group when the animation file is decoded, where the interval for each animation attribute meets the still condition; determine an overlapping part among the intervals for all animation attribute values to be an interval for group drawing data, of the animation attribute group; and determine an overlapping part among the intervals for group drawing data to be the interval for animation drawing data, of the animation layer.

In the foregoing embodiment, the intervals for animation attribute values that meet the still condition are first determined, and then the interval for animation drawing data is calculated through the bubble-sort algorithm, such that the initial animation drawing data of the interval for animation drawing data can be cached. Thereby, when an animation frame of which attribute values meet the still condition is to be played, the initial animation drawing data corresponding to such to-be-played frames is directly obtained from a cache. A calculation amount is reduced, and a time consumption of the rendering is reduced, thereby smoothing play of the animation.

In an embodiment as shown in Figure 21, the apparatus further includes an attribute-value obtaining module 2012.

The data caching module 2006 is further configured to cache an initial animation attribute value of the interval for animation attribute value, in a case that there is no overlapping part among the intervals for animation attribute values.

The data reading module 2008 is further configured to read, when playing the animation file, the cached initial animation attribute value corresponding to the to-be-played frames, in a case that the animation drawing data of the to-be-played frames does not meet the still condition and there is no overlapping part among the intervals for animation attribute values.

The attribute value obtaining module 2012 is configured to obtain, from an animation file object obtained by decoding the animation file, an animation attribute value that is of the to-be-played frames and does not meet the still condition.

The animation rendering module 2010 is further configured to perform the animation rendering according to the read initial animation attribute value and the obtained animation attribute value.

In the foregoing embodiment, when there is no interval in which either the animation layer or the animation attribute group is still, the initial animation attribute values of the intervals in which animation attribute values are still are cached. In a case the to-be-played frames hit the interval in which an animation attribute value is still, the initial animation attribute value corresponding to the to-be-played frames is read from the cache, and it is not necessary to parse the animation file object to obtain such animation attribute value. A calculation amount is reduced, and a time consumption of the rendering is reduced, thereby smoothing play of the animation.

In an embodiment, as shown in Figure 21, the apparatus further includes a data obtaining module 2014.

The data caching module 2006 is further configured to cache initial group drawing data of an interval for group drawing data, in a case that there is an overlapping part among the intervals for animation attribute values and there is no overlapping part among the intervals for group drawing data.

The data reading module 2008 is further configured to read, when playing the animation file, the initial group drawing data corresponding to the to-be-played frames, in a case that the animation drawing data of the to-be-played frames does not meet the still condition.

The data obtaining module 2014 is configured to obtain, from an animation file object obtained by decoding the animation file, group drawing data that is of the to-be-played frames and does not meet the still condition.

The animation rendering module 2010 is further configured to perform the animation rendering according to the read initial group drawing data and the obtained group drawing data.

In the foregoing embodiment, when there is no interval in which the animation layer is still and there is an interval in which the animation attribute group is still, the initial group drawing data of the interval in which the piece of group drawing data is still is cached. When the to-be-played frames hit the interval for group drawing data, the initial group drawing data corresponding to the to-be-played frames is read from the cache, and it is not necessary to parse the animation file object to acquire the group drawing data in the "still" interval. A calculation amount is reduced, and a time consumption of the rendering is reduced, thereby smoothing play of the animation.

In an embodiment, an animation attribute group includes at least two drawable elements, in a case that the animation attribute group is an attribute group of drawable elements. Each drawable element may include at least two animation attribute values. As shown in Figure 21, the apparatus further includes an overlapping part calculating module 2016.

The determining module 2004 is further configured to determine the overlapping part among the intervals for these animation attribute values to be an element interval for the drawable element.

The overlapping part calculating module 2016 is configured to calculate an overlapping part among the element intervals for the drawable elements.

The determining module 2004 is further configured to determine the overlapping part among the element intervals to be the interval for group drawing data, of the animation attribute group.

In an embodiment, in a case that the animation drawing data of the to-be-played frames meets the still condition when playing the animation file, the data reading module 2008 is further configured to: determine a play progress corresponding to each of more than one application, in a case that the animation file is played in the more than one application; and read the cached initial animation drawing data, which corresponds to the play progress and is shared by the more than one application, in a case that the animation drawing data of the to-be-played frames corresponding to the play progress meets the still condition.

In the foregoing embodiment, in a case that multiple applications in the client plays the same animation, the multiple applications share the animation drawing data obtained by parsing the same animation file, and the initial animation drawing data is cached. Therefore, a caching space is reduced in one aspect, and a calculation amount in the parsing is reduced in another aspect. When the animation drawing data of each to-be-played frame meets the still condition, the initial animation drawing data corresponding to said to-be-played frame is obtained from the cache, and it is not necessary to parse the animation file object to obtain the animation drawing data in a "still" interval. A calculation amount is reduced, and a time consumption of the rendering is reduced, thereby smoothing play of the animation.

In an embodiment, the animation file includes vector graphics. The data obtaining module 2014 is further configured to obtain animation drawing data related to the vector graphics by decoding the animation file.

The animation rendering module 2010 is further configured to perform off-screen rendering on the animation drawing data, so as to obtain animation rendering data.

The data caching module 2006 is further configured to cache the animation rendering data.

The data reading module 2008 is further configured to read the cached animation rendering data corresponding to the to-be-played frame, in a case that the to-be-played frame is an animation frame of the vector graphics when playing the animation file.

In an embodiment, the animation rendering module 2010 is further configured to: determine a first size ratio of an internal container carrying animation frames to an external container; determine a second size ratio of an animation layer to the internal container; determine a third size ratio of animation drawing data in an attribute group of drawable elements to the animation layer; and determine a scaling ratio according to the first size ratio, the second size ratio, and the third size ratio.

In an embodiment, the animation rendering module 2010 is further configured to: determine a size of the external container configured to display the vector graphics; determine the scaling ratio of a size of the animation drawing data to the size of the external container; create an off-screen buffer; and perform, in the off-screen buffer, animation rendering on the animation drawing data according to the size of the external container and the scaling ratio, to obtain the animation rendering data.

In the foregoing embodiment, the animation drawing data of the vector graphics is pre-rendered, and then the animation rendering data obtained through the rendering is cached. In a case that the to-be-played frame is an animation frame of the vector graphics during the play, the animation rendering data of the to-be-played frame is read from a cache, preventing the time consumption of converting the animation drawing data into the animation rendering data. A time consumption of converting the animation drawing data into the animation rendering data is avoided, thereby effectively reducing a time consumption of the rendering, and improving fluency of playing the animation.

In an embodiment as shown in Figure 21, the apparatus further includes: a scaling-ratio obtaining module 2018 and a size adjustment module 2020.

The scaling ratio obtaining module 2018 is configured to obtain the scaling ratio that is changed, in a case that a ratio corresponding to a node in a node tree is changed. The node tree includes the external container, the internal container, the animation layer(s), the attribute group(s) of drawable elements, and animation drawing data in the attribute group(s) of drawable elements.

The size adjustment module 2020 is configured to adjust the size of the cached animation rendering data according to the changed scaling ratio.

Alternatively, the scaling ratio obtaining module 2018 is further configured to obtain the scaling ratio that is inputted.

The size adjustment module 2020 is further configured to adjust the size of the cached animation rendering data according to the inputted scaling ratio.

In the foregoing embodiment, the animation drawing data of the vector graphics is pre-rendered, to prevent the time consumption of converting the animation drawing data into the animation rendering data during the play. Thereby, the time consumption of the rendering is effectively reduced, improving the fluency of playing the animation.

In an embodiment, the data obtaining module 2014 is further configured to obtain animation rendering data of the vector graphics of a largest size among different sizes, in a case that the animation file includes multiple animation layers and the animation layers include the vector graphics of the different sizes.

The data caching module 2006 is further configured to cache the animation rendering data corresponding to the vector graphics of the largest size.

In the foregoing embodiment, the animation rendering data corresponding to the vector graphics of the largest size is cached, in a case that the same vector graphics appears in multiple layers. In one aspect, it can be prevented that three copies of animation rendering data are cached, thereby reducing the occupied caching space. In another aspect, the animation rendering data of the largest size is cached to prevent that the image definition is reduced due to the vector graphics being stretched during the play.

In an embodiment, the data caching module 2006 is further configured to: determine, in a pre-composed attribute group, an animation region including first target animation rendering data, in a case that the animation file includes the pre-composed attribute group; determine a minimum animation region including second target animation rendering data, in a case that a size of a region of non-animation rendering data included in the animation region meets a preset condition, where the first target animation rendering data is a part of the second target animation rendering data; determine an overlapping part region between the obtained animation region and the minimum animation region; and determine the overlapping part region to be the animation region of the pre-composed attribute group.

In the foregoing embodiment, the animation region of the pre-composed animation attribute group needs to be re-determined in case of including a large invalid region, so as to ensure that the animation region include the animation rendering data while the invalid region is as small as possible. Therefore, potential additional calculation required during the rendering is avoided, and it is prevented that the invalid region is scanned when displaying on a screen, reducing a time consumption of an on-screen process.

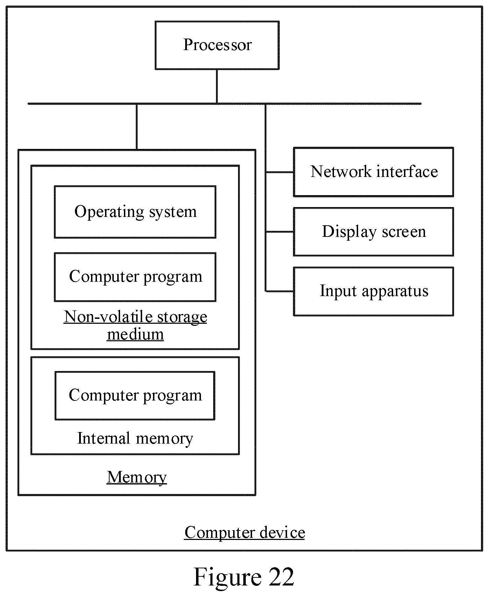

Figure 22 is a diagram of an internal structure of a computer device according to an embodiment. In a specific embodiment, the computer device may be the terminal 110 as shown in Figure 1. As shown in Figure 22, the computer device includes a processor, a memory, a network interface, an input apparatus, and a display screen that are connected via a system bus. The memory includes a non-volatile storage medium and an internal memory. The non-volatile storage medium of the computer device stores an operating system, and may further store a computer program. The computer program, when executed by the processor, may configure the processor to implement the method for rendering an animation. The internal memory may store another computer program. The computer program, when executed by the processor, may configure the processor to perform the method for rendering an animation. The display screen of the computer device may be a liquid crystal display screen or an e-ink display screen. The input apparatus of the computer device may be a touch layer covering the display screen, may be a button, a trackball, or a touchpad disposed on a housing of the computer device, or may be an external keyboard, an external touchpad, a mouse, or the like.

A person skilled in the art may understand that, the structure shown in Figure 22 is merely a block diagram of a partial structure related to a solution according to the present disclosure, and does not constitute a limitation on the computer device on which the solution is applied. Specifically, the computer device may include more or fewer components than those as shown in the figure. Alternatively, some components may be combined, or the components may be deployed in another manner.

The apparatus for rendering an animation provided in an embodiment of the present disclosure may be implemented in a form of a computer program. The computer program may be executed on the computer device shown in Figure 22. The memory of the computer device may store program modules forming the apparatus for rendering an animation, for example, forming the file obtaining module 2002, the determining module 2004, the data caching module 2006, the data reading module 2008, and the animation rendering module 2010 as shown in Figure 20. The computer program formed by the program modules configures the processor to perform the steps of the method for rendering an animation according to embodiments described herein.

For example, the computer device as shown in Figure 22 may perform the step S202 through the file obtaining module 2002 in the apparatus for rendering an animation as shown in Figure 20. The computer device may perform the step S204 through the determining module 2004. The computer device may perform the step S206 through the data caching module 2006. The computer device may perform the step S208 through the data reading module 2008. The computer device may perform the step S210 through the animation rendering module 2010.

In an embodiment, a computer device is provided, including a memory and a processor. The memory stores a computer program, and the computer program when executed by the processor configures the processor to perform steps of the foregoing method for rendering an animation. Herein, the steps of the method for rendering an animation may be the steps of the method in the foregoing embodiments.

In an embodiment, a computer-readable storage medium is provided, storing a computer program. The computer program, when executed by a processor, configures the processor to perform steps of the foregoing method for rendering an animation. Herein the steps of the method for rendering an animation may be the steps of the method in the foregoing embodiments.

Those skilled in the art may understand that all or some of procedures of the method in the foregoing embodiments may be implemented by a computer program instructing relevant hardware. The program may be stored in a non-volatile computer-readable storage medium. The procedures of the foregoing method embodiments may be implemented when the program is executed. All references to the memory, the storage, the database, or other medium used in embodiments of the present disclosure may include a non-volatile and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a RAM or an external cache. By way of description rather than limitation, the RAM may be implemented in various forms, such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a rambus direct RAM (RDRAM), a direct rambus dynamic RAM (DRDRAM), and a rambus dynamic RAM (RDRAM).

## Claims

1. A method for rendering an animation, the method comprising:
obtaining (S202) an animation file in a target format, wherein the animation file comprises animation drawing data for establishing animation frames;
determining (S204) an interval for animation drawing data when the animation file is decoded to obtain the animation drawing data, wherein the animation drawing data is used for describing or drawing content of animation, and wherein
the interval for animation drawing data is a time period in which the animation drawing data does not change with respect to time;
caching (S206) initial animation drawing data of the interval for animation drawing data, wherein the initial animation drawing data is the animation drawing data of the first frame within the interval for animation drawing data;
reading (S208), when playing the animation file, the cached initial animation drawing data that corresponds to to-be-played frames, in a case that animation drawing data of the to-be-played frames meets
a still condition, wherein meeting the still condition refers to not changing animation drawing data that forms animation frames, in the interval; and
performing (S210) animation rendering according to the initial animation drawing data that is read.

2. The method according to claim 1, wherein determining (S204) the interval for animation drawing data when the animation file is decoded to obtain the animation drawing data comprises:
decoding (S302) the animation file to obtain an animation file object, wherein the animation file object comprises data related to animation frames of the animation file;
reading (S304) animation drawing data in the animation file object; and
determining (S306) the interval for animation drawing data from the animation drawing data that is read.

3. The method according to claim 1, wherein:
each animation frame in the animation file is formed by superposing a plurality of animation layers, the animation layer is formed by animation attribute groups, and an animation attribute value is an element in the animation attribute group;
the animation file comprises at least one animation layer, each animation layer comprises at least two animation attribute groups, each animation attribute group comprises at least two animation attribute values, and
wherein determining (S204) the interval for animation drawing data when the animation file is decoded to obtain the animation drawing data comprises:
determining (S402) an interval for each animation attribute value in an animation attribute group when the animation file is decoded, wherein the interval for each animation attribute value is a time period in which said animation attribute value does not change with respect to time;
determining (S404) an overlapping part among the intervals for the animation attribute values to be an interval for group drawing data, of the animation attribute group; and
determining (S406) an overlapping part among the intervals for group drawing data to be the interval for animation drawing data, of the animation layer.

4. The method according to claim 3, further comprising:
caching (S602) an initial animation attribute value of the interval for animation attribute value, in a case that there is no overlapping part among the intervals for animation attribute values; and
when playing the animation file, in a case that the animation drawing data of the to-be-played frames does not meet the still condition and there is no overlapping part among the intervals for animation attribute values,
reading (S604) the cached initial animation attribute value corresponding to the to-be-played frames;
obtaining (S606), from an animation file object obtained by decoding the animation file, an animation attribute value that is of the to-be-played frames and does not meet the still condition; and
performing (S608) the animation rendering according to the read initial animation attribute value and the obtained animation attribute value.

5. The method according to claim 3, further comprising:
caching (S702) initial group drawing data of an interval for group drawing data, in a case that there is an overlapping part among the intervals for animation attribute values and there is no overlapping part among the intervals for group drawing data;
when playing the animation file, in a case that the animation drawing data of the to-be-played frames does not meet the still condition,
reading (S704) the initial group drawing data corresponding to the to-be-played frames;
obtaining (S706), from an animation file object obtained by decoding the animation file, group drawing data that is of the to-be-played frames and does not meet the still condition; and
performing (S708) the animation rendering according to the read initial group drawing data and the obtained group drawing data.

6. The method according to claim 3, wherein an animation attribute group comprises at least two drawable elements, in a case that the animation attribute group is an attribute group of drawable elements;
wherein each drawable element comprises at least two animation attribute values;
wherein the method further comprises:
determining the overlapping part among the intervals for the animation attribute values to be an element interval for the drawable element;
calculating an overlapping part among the element intervals for the drawable elements; and
wherein determining the overlapping part among the intervals for the animation attribute values to be the interval for group drawing data of the animation attribute group comprises:
determining the overlapping part among the element intervals to be the interval for group drawing data, of the animation attribute group.

7. The method according to claim 1, wherein reading, when playing the animation file, the cached initial animation drawing data that corresponds to the to-be-played frames in the case that the animation drawing data of the to-be-played frames meets the still condition comprises:
determining (S802) a play progress corresponding to each of more than one application, in a case that the animation file is played in the more than one application; and
reading (S804) the cached initial animation drawing data, which corresponds to the play progress and is shared by the more than one application, in a case that the animation drawing data of the to-be-played frames corresponding to the play progress meets the still condition.

8. The method according to claim 1, wherein the animation file comprises vector graphics, and the method further comprises:
obtaining (S902) animation drawing data related to the vector graphics by decoding the animation file;
performing (S904) off-screen rendering on the animation drawing data, to obtain animation rendering data;
caching (S906) the animation rendering data; and
reading (S908) the cached animation rendering data corresponding to the to-be-played frames, in a case that the to-be-played frames are animation frames of the vector graphics when playing the animation file.

9. The method according to claim 8, wherein performing the off-screen rendering on the animation drawing data to obtain the animation rendering data comprises:
determining (S1002) a size of an external container configured to display the vector graphics;
determining (S1004) a scaling ratio of a size of the animation drawing data to the size of the external container;
creating (S1006) an off-screen buffer; and
performing (S1008), in the off-screen buffer, animation rendering on the animation drawing data according to the size of the external container and the scaling ratio, to obtain the animation rendering data.

10. The method according to claim 9, wherein the determining the scaling ratio of the size of the animation drawing data to the size of the external container comprises:
determining a first size ratio of an internal container carrying animation frames to the external container;
determining a second size ratio of an animation layer to the internal container;
determining a third size ratio of animation drawing data in an attribute group of drawable elements to the animation layer; and
determining the scaling ratio according to the first size ratio, the second size ratio, and the third size ratio.

11. The method according to claim 10, further comprising:
obtaining the scaling ratio that is changed, in a case that a ratio corresponding to a node in a node tree is changed, wherein the node tree comprises the external container, the internal container, the animation layer, the attribute group of drawable elements, and animation drawing data in the attribute group of drawable elements; and adjusting the size of the cached animation rendering data according to the changed scaling ratio;
or,
obtaining the scaling ratio that is inputted, and adjusting the size of the cached animation rendering data according to the inputted scaling ratio.

12. The method according to claim 8, further comprising:
in a case that the animation file comprises a plurality of animation layers and the animation layers comprise the vector graphics of different sizes,
obtaining (S1102) animation rendering data of the vector graphics of a largest size among the different sizes; and
wherein caching the animation rendering data comprises:
caching (S1104) the animation rendering data corresponding to the vector graphics of the largest size.

13. The method according to any one of claims 1 to 12, wherein after performing the animation rendering according to the initial animation drawing data that is read, the method further comprises:
determining (S1202), in a pre-composed attribute group, an animation region comprising first target animation rendering data, in a case that the animation file comprises the pre-composed attribute group;
determining (S1204) a minimum animation region comprising second target animation rendering data, in a case that a size of a region of non-animation rendering data comprised in the animation region meets a preset condition, wherein the first target animation rendering data is a part of the second target animation rendering data;
determining (S1206) an overlapping part region between the obtained animation region and the minimum animation region; and
determining (S1208) the overlapping part region to be the animation region of the pre-composed attribute group.

14. A computer-readable storage medium, storing a computer program, wherein the computer program when executed by a processor configured the processor to perform the method according to any one of claims 1 to 13.

15. A computer device, comprising a memory and a processor, wherein
the memory stores a computer program, and the computer program when executed by the processor configure the processor to perform the method according to any one of claims 1 to 13.

## Patentansprüche

1. Verfahren zum Rendern einer Animation, wobei das Verfahren umfasst:
Erhalten (S202) einer Animationsdatei in einem Zielformat, wobei die Animationsdatei Animationszeichnungsdaten zum Erstellen von Animationsrahmen umfasst;
Bestimmen (S204) eines Intervalls für Animationszeichnungsdaten, wenn die Animationsdatei dekodiert wird, um die Animationszeichnungsdaten zu erhalten, wobei die Animationszeichnungsdaten zum Beschreiben oder Zeichnen von Animationsinhalt verwendet werden, und wobei das Intervall für Animationszeichnungsdaten eine Zeitperiode ist, in der sich die Animationszeichnungsdaten in Bezug auf die Zeit nicht ändern;
Zwischenspeichern (S206) von initialen Animationszeichnungsdaten des Intervalls für Animationszeichnungsdaten, wobei die initialen Animationszeichnungsdaten die Animationszeichnungsdaten des ersten Rahmens innerhalb des Intervalls für Animationszeichnungsdaten sind;
Lesen (S208), wenn die Animationsdatei abgespielt wird, der zwischengespeicherten initialen Animationszeichnungsdaten, die zu abzuspielenden Rahmen korrespondieren, in einem Fall, dass die Animationszeichnungsdaten der abzuspielenden Rahmen eine Stillstandbedingung erfüllen, wobei sich das Erfüllen der Stillstandbedingung darauf bezieht, dass Animationszeichnungsdaten, die Animationsrahmen bilden, in dem Intervall nicht geändert werden; und
Durchführen (S210) des Renderns der Animation gemäß den gelesenen initialen Animationszeichnungsdaten.

2. Verfahren nach Anspruch 1, wobei das Bestimmen (S204) des Intervalls für Animationszeichnungsdaten, wenn die Animationsdatei dekodiert wird, um die Animationszeichnungsdaten zu erhalten, umfasst:
Dekodieren (S302) der Animationsdatei, um ein Animationsdatei-Objekt zu erhalten, wobei das Animationsdatei-Objekt Daten umfasst, die sich auf Animationsrahmen der Animationsdatei beziehen;
Lesen (S304) von Animationszeichnungsdaten in dem Animationsdatei-Objekt; und
Bestimmen (S306) des Intervalls für Animationszeichnungsdaten aus den gelesenen Animationszeichnungsdaten.

3. Verfahren nach Anspruch 1, wobei:
jeder Animationsrahmen in der Animationsdatei durch Überlagern einer Mehrzahl von Animationsschichten gebildet wird, wobei die Animationsschicht durch Animationsattributgruppen gebildet wird und ein Animationsattributwert ein Element in der Animationsattributgruppe ist;
die Animationsdatei mindestens eine Animationsschicht umfasst, wobei jede Animationsschicht mindestens zwei Animationsattributgruppen umfasst, wobei jede Animationsattributgruppe mindestens zwei Animationsattributwerte umfasst, und
wobei das Bestimmen (S204) des Intervalls für Animationszeichnungsdaten, wenn die Animationsdatei dekodiert wird, um die Animationszeichnungsdaten zu erhalten, umfasst:
Bestimmen (S402) eines Intervalls für jeden Animationsattributwert in einer Animationsattributgruppe, wenn die Animationsdatei dekodiert wird, wobei das Intervall für jeden Animationsattributwert eine Zeitperiode ist, in der sich der Animationsattributwert in Bezug auf die Zeit nicht ändert;
Bestimmen (S404) eines überlappenden Teils unter den Intervallen für die Animationsattributwerte als ein Intervall für Gruppenzeichnungsdaten der Animationsattributgruppe; und
Bestimmen (S406) eines überlappenden Teils unter den Intervallen für Gruppenzeichnungsdaten als das Intervall für Animationszeichnungsdaten der Animationsschicht.

4. Verfahren nach Anspruch 3, des Weiteren umfassend:
Zwischenspeichern (S602) eines initialen Animationsattributwerts des Intervalls für den Animationsattributwert, in einem Fall, dass es keinen überlappenden Teil unter den Intervallen für Animationsattributwerte gibt; und
beim Abspielen der Animationsdatei, in einem Fall, dass die Animationszeichnungsdaten der abzuspielenden Rahmen die Stillstandbedingung nicht erfüllen und es keinen überlappenden Teil unter den Intervallen für die Animationsattributwerte gibt,
Lesen (S604) des zwischengespeicherten initialen Animationsattributwertes, der zu den abzuspielenden Rahmen korrespondiert;
Erhalten (S606), aus einem Animationsdatei-Objekt, das durch Dekodieren der Animationsdatei erhalten wurde, eines Animationsattributwerts, der zu den abzuspielenden Rahmen gehört und die Stillstandbedingung nicht erfüllt; und
Durchführen (S608) des Renderns der Animation gemäß dem gelesenen initialen Animationsattributwert und dem erhaltenen Animationsattributwert.

5. Verfahren nach Anspruch 3, des Weiteren umfassend:
Zwischenspeichern (S702) von initialen Gruppenzeichnungsdaten eines Intervalls für Gruppenzeichnungsdaten, in einem Fall, dass es einen überlappenden Teil unter den Intervallen für Animationsattributwerte gibt und es keinen überlappenden Teil unter den Intervallen für Gruppenzeichnungsdaten gibt;
beim Abspielen der Animationsdatei, in einem Fall, dass die Animationszeichnungsdaten der abzuspielenden Rahmen die Stillstandbedingung nicht erfüllen,
Lesen (S704) der initialen Gruppenzeichnungsdaten, die zu den abzuspielenden Rahmen gehören;
Erhalten (S706), von einem Animationsdatei-Objekt, das durch Dekodieren der Animationsdatei erhalten wurde, von Gruppenzeichnungsdaten, die zu den abzuspielenden Rahmen bestehen und nicht die Stillstandbedingung erfüllen; und
Durchführen (S708) des Animationsrenderings gemäß den gelesenen initialen Gruppenzeichnungsdaten und den erhaltenen Gruppenzeichnungsdaten.

6. Verfahren nach Anspruch 3, wobei eine Animationsattributgruppe mindestens zwei zeichenbare Elemente umfasst, in einem Fall, dass die Animationsattributgruppe eine Attributgruppe von zeichenbaren Elementen ist;
wobei jedes zeichenbare Element mindestens zwei Animationsattributwerte umfasst;
wobei das Verfahren des Weiteren umfasst:
Bestimmen des überlappenden Teils unter den Intervallen für die Animationsattributwerte als ein Elementintervall für das zeichenbare Element;
Berechnen eines überlappenden Teils unter den Elementintervallen für die zeichenbaren Elemente; und
wobei das Bestimmen des überlappenden Teils unter den Intervallen für die Animationsattributwerte als das Intervall für Gruppenzeichnungsdaten der Animationsattributgruppe umfasst:
Bestimmen des überlappenden Teils unter den Elementintervallen als das Intervall für Gruppenzeichnungsdaten der Animationsattributgruppe.

7. Verfahren nach Anspruch 1, wobei das Lesen, beim Abspielen der Animationsdatei, der zwischengespeicherten initialen Animationszeichnungsdaten, die zu den abzuspielenden Rahmen korrespondieren, in einem Fall, dass die Animationszeichnungsdaten der abzuspielenden Rahmen die Stillstandbedingung erfüllen, umfasst:
Bestimmen (S802) eines Abspielfortschritts, der zu jeder von mehr als einer Anwendung korrespondiert, in einem Fall, dass die Animationsdatei in der mehr als einen Anwendung abgespielt wird; und
Lesen (S804) der zwischengespeicherten initialen Animationszeichnungsdaten, die zu dem Spielfortschritt korrespondieren und von der mehr als einer Anwendung gemeinsam genutzt werden, in einem Fall, dass die Animationszeichnungsdaten der abzuspielenden Rahmen, die zu dem Spielfortschritt korrespondieren, die Stillstandbedingung erfüllen.

8. Verfahren nach Anspruch 1, wobei die Animationsdatei Vektorgrafiken umfasst, und das Verfahren des Weiteren umfasst:
Erhalten (S902) von Animationszeichnungsdaten, die sich auf die Vektorgrafiken beziehen, durch Dekodieren der Animationsdatei;
Durchführen (S904) eines Off-Screen-Renderings auf den Animationszeichnungsdaten, um Animationsrenderingdaten zu erhalten;
Zwischenspeichern (S906) der Animationsrenderingdaten; und
Lesen (S908) der zwischengespeicherten Animationsrenderingdaten, die zu den abzuspielenden Rahmen korrespondieren, in einem Fall, dass die abzuspielenden Rahmen Animationsrahmen der Vektorgrafiken beim Abspielen der Animationsdatei sind.

9. Verfahren nach Anspruch 8, wobei das Durchführen des Off-Screen-Renderings auf den Animationszeichnungsdaten zum Erhalten der Animationsrenderingdaten umfasst:
Bestimmen (S1002) einer Größe eines externen Containers, der zum Anzeigen der Vektorgrafiken konfiguriert ist;
Bestimmen (S1004) eines Skalierungsverhältnisses der Größe der Animationszeichnungsdaten zu der Größe des externen Containers;
Erzeugen (S1006) eines Off-Screen-Puffers; und
Durchführen (S1008), in dem Off-Screen-Puffer, eines Animationsrenderings auf den Animationszeichnungsdaten gemäß der Größe des externen Containers und des Skalierungsverhältnisses, um die Animationsrenderingdaten zu erhalten.

10. Verfahren nach Anspruch 9, wobei das Bestimmen des Skalierungsverhältnisses zwischen der Größe der Animationszeichnungsdaten und der Größe des externen Containers umfasst:
Bestimmen eines ersten Größenverhältnisses eines internen Containers, der Animationsrahmen trägt, zu dem externen Container;
Bestimmen eines zweiten Größenverhältnisses einer Animationsschicht zu dem internen Container;
Bestimmen eines dritten Größenverhältnisses von Animationszeichnungsdaten in einer Attributgruppe von zeichenbaren Elementen zu der Animationsschicht; und
Bestimmen des Skalierungsverhältnisses gemäß dem ersten Größenverhältnis, dem zweiten Größenverhältnis und dem dritten Größenverhältnis.

11. Verfahren nach Anspruch 10, des Weiteren umfassend:
Erhalten des Skalierungsverhältnisses, das geändert wird, in einem Fall, dass ein Verhältnis, das zu einem Knoten in einem Knotenbaum korrespondiert, geändert wird, wobei der Knotenbaum den externen Container, den internen Container, die Animationsschicht, die Attributgruppe von zeichenbaren Elementen und Animationszeichnungsdaten in der Attributgruppe von zeichenbaren Elementen umfasst; und Anpassen der Größe der zwischengespeicherten Animationsrenderingdaten gemäß dem geänderten Skalierungsverhältnis;
oder,
Ermitteln des eingegebenen Skalierungsverhältnisses und Anpassen der Größe der zwischengespeicherten Animationsrenderingdaten gemäß dem eingegebenen Skalierungsverhältnis.

12. Verfahren nach Anspruch 8, des Weiteren umfassend:
in einem Fall. dass die Animationsdatei eine Mehrzahl von Animationsschichten umfasst und die Animationsschichten die Vektorgrafiken unterschiedlicher Größe umfassen,
Erhalten (S1102) von Animationsrenderingdaten der Vektorgrafiken einer größten Größe unter den verschiedenen Größen; und
wobei das Zwischenspeichern der Animationsrenderingdaten umfasst:
Zwischenspeichern (S1104) der Animationsrenderingdaten, die zu den Vektorgrafiken mit der größten Größe korrespondieren.

13. Verfahren nach einem der Ansprüche 1 bis 12, wobei das Verfahren nach dem Durchführen des Renderns der Animation gemäß den gelesenen initialen Animationszeichnungsdaten des Weiteren umfasst:
Bestimmen (S1202), in einer vorab zusammengestellten Attributgruppe, eines Animationsbereichs, der erste Zielanimationsrenderingdaten umfasst, in einem Fall, dass die Animationsdatei die vorab zusammengestellte Attributgruppe umfasst;
Bestimmen (S1204) eines minimalen Animationsbereichs, der zweite Zielanimationsrenderingdaten umfasst, in einem Fall, dass eine Größe eines Bereichs von Nichtanimationsrenderingdaten, die in dem Animationsbereich umfasst sind, eine voreingestellte Bedingung erfüllt, wobei die ersten Zielanimationsrenderingdaten ein Teil der zweiten Zielanimationsrenderingdaten sind;
Bestimmen (S1206) eines überlappenden Teilbereichs zwischen dem erhaltenen Animationsbereich und dem minimalen Animationsbereich; und
Bestimmen (S1208) des überlappenden Teilbereichs als Animationsbereich der vorab zusammengestellten Attributgruppe.

14. Computerlesbares Speichermedium, das ein Computerprogramm speichert, wobei das Computerprogramm, wenn es von einem Prozessor ausgeführt wird, den Prozessor so konfiguriert, dass er das Verfahren nach einem der Ansprüche 1 bis 13 durchführt.

15. Computervorrichtung, die einen Speicher und einen Prozessor umfasst, wobei
der Speicher ein Computerprogramm speichert, und das Computerprogramm, wenn es von dem Prozessor ausgeführt wird, den Prozessor so konfiguriert, dass er das Verfahren nach einem der Ansprüche 1 bis 13 durchführt.

## Revendications

1. Procédé de rendu d'une animation, le procédé comprenant:
obtenir (S202) un fichier d'animation dans un format cible, dans lequel le fichier d'animation comprend des données de dessin d'animation pour établir des cadres d'animation;
déterminer (S204) un intervalle pour des données de dessin d'animation lorsque le fichier d'animation est décodé pour obtenir les données de dessin d'animation, dans lequel les données de dessin d'animation sont utilisées pour décrire ou dessiner du contenu d'animation, et dans lequel l'intervalle pour des données de dessin d'animation est une période de temps pendant laquelle les données de dessin d'animation ne changent pas par rapport au temps;
mettre en cache (S206) des données de dessin d'animation initiales de l'intervalle pour des données de dessin d'animation, dans lequel les données de dessin d'animation initiales sont les données de dessin d'animation du premier cadre dans l'intervalle pour des données de dessin d'animation;
lire (S208), lors de la lecture du fichier d'animation, les données de dessin d'animation initiales mises en cache qui correspondent à des cadres à lire, dans un cas où les données de dessin d'animation des cadres à lire remplissent une condition d'immobilité, dans lequel le respect de la condition d'immobilité fait référence au fait de ne pas modifier des données de dessin d'animation qui forment des cadres d'animation, dans l'intervalle, et
effectuer (S210) un rendu d'animation selon les données de dessin d'animation initiales qui sont lues.

2. Procédé selon la revendication 1, dans lequel la détermination (S204) de l'intervalle pour des données de dessin d'animation lorsque le fichier d'animation est décodé pour obtenir les données de dessin d'animation comprend:
décoder (S302) le fichier d'animation pour obtenir un objet de fichier d'animation, dans lequel l'objet de fichier d'animation comprend des données liées à des cadres d'animation du fichier d'animation;
lire (S304) des données de dessin d'animation dans l'objet de fichier d'animation; et
déterminer (S306) l'intervalle pour des données de dessin d'animation à partir des données de dessin d'animation qui sont lues.

3. Procédé selon la revendication 1, dans lequel:
chaque cadre d'animation dans le fichier d'animation est formé par superposition d'une pluralité de couches d'animation, dans lequel la couche d'animation est formée par des groupes d'attributs d'animation, et une valeur d'attribut d'animation est un élément dans le groupe d'attributs d'animation;
le fichier d'animation comprend au moins une couche d'animation, chaque couche d'animation comprend au moins deux groupes d'attributs d'animation, chaque groupe d'attributs d'animation comprend au moins deux valeurs d'attribut d'animation, et
dans lequel la détermination (S204) de l'intervalle pour des données de dessin d'animation lorsque le fichier d'animation est décodé pour obtenir les données de dessin d'animation comprend:
déterminer (S402) un intervalle pour chaque valeur d'attribut d'animation dans un groupe d'attributs d'animation lorsque le fichier d'animation est décodé, dans lequel l'intervalle pour chaque valeur d'attribut d'animation est une période de temps pendant laquelle ladite valeur d'attribut d'animation ne change pas par rapport au temps;
déterminer (S404) une partie chevauchante parmi les intervalles pour les valeurs d'attribut d'animation comme étant un intervalle pour des données de dessin de groupe, du groupe d'attributs d'animation; et
déterminer (S406) une partie chevauchante parmi les intervalles pour des données de dessin de groupe comme étant l'intervalle pour des données de dessin d'animation, de la couche d'animation.

4. Procédé selon la revendication 3, comprenant en outre:
mettre en cache (S602) une valeur d'attribut d'animation initiale de l'intervalle pour la valeur d'attribut d'animation, dans un cas où il n'y a pas de partie chevauchante parmi les intervalles pour des valeurs d'attribut d'animation; et
lors de la lecture du fichier d'animation, dans un cas où les données de dessin d'animation des cadres à lire ne satisfont pas à la condition d'immobilité et qu'il n'y a pas de partie chevauchante parmi les intervalles pour des valeurs d'attribut d'animation,
lire (S604) la valeur d'attribut d'animation initiale mise en cache correspondant aux cadres à lire;
obtenir (S606), à partir d'un objet de fichier d'animation obtenu par décodage du fichier d'animation, une valeur d'attribut d'animation qui appartient aux cadres à lire et ne satisfait pas à la condition d'immobilité; et
effectuer (S608) le rendu d'animation en fonction de la valeur d'attribut d'animation initiale lue et de la valeur d'attribut d'animation obtenue.

5. Procédé selon la revendication 3, comprenant en outre:
mettre en cache (S702) des données de dessin de groupe initiales d'un intervalle pour des données de dessin de groupe, dans un cas où il y a une partie chevauchante parmi les intervalles pour des valeurs d'attribut d'animation et il n'y a pas de partie chevauchante parmi les intervalles pour des données de dessin de groupe;
lors de la lecture du fichier d'animation, dans un cas où les données de dessin d'animation des cadres à lire ne satisfont pas à la condition d'immobilité,
lire (S704) les données de dessin de groupe initiales correspondant aux cadres à lire;
obtenir (S706), à partir d'un objet de fichier d'animation obtenu par décodage du fichier d'animation, des données de dessin de groupe qui appartiennent aux cadres à lire et ne satisfont pas à la condition d'immobilité; et
effectuer (S708) le rendu d'animation en fonction des données de dessin de groupe initiales lues et des données de dessin de groupe obtenues.

6. Procédé selon la revendication 3, dans lequel un groupe d'attributs d'animation comprend au moins deux éléments dessinables, dans un cas où le groupe d'attributs d'animation est un groupe d'attributs d'éléments dessinables;
dans lequel chaque élément dessinable comprend au moins deux valeurs d'attribut d'animation;
dans lequel le procédé comprend en outre:
déterminer que la partie chevauchante parmi les intervalles pour les valeurs d'attribut d'animation est un intervalle d'élément pour l'élément dessinable;
calculer une partie chevauchante parmi les intervalles d'éléments pour les éléments dessinables; et
dans lequel la détermination de la partie chevauchante parmi les intervalles pour les valeurs d'attribut d'animation comme étant l'intervalle pour des données de dessin de groupe du groupe d'attributs d'animation comprend:
déterminer la partie chevauchante parmi les intervalles d'éléments comme étant l'intervalle pour des données de dessin de groupe, du groupe d'attributs d'animation.

7. Procédé selon la revendication 1, dans lequel la lecture, lors de la lecture du fichier d'animation, des données de dessin d'animation initiales mises en cache qui correspondent aux cadres à lire dans un cas où les données de dessin d'animation des cadres à lire satisfont à la condition d'immobilité, comprend:
déterminer (S802) un progrès de lecture correspondant à chacune de plus d'une application, dans un cas où le fichier d'animation est lu dans ladite plus d'une application; et
lire (S804) les données de dessin d'animation initiales mises en cache, qui correspondent au progrès de lecture et sont partagées par ladite plus d'une application, dans un cas où les données de dessin d'animation des cadres à lire correspondant au progrès de lecture satisfont à la condition d'immobilité.

8. Procédé selon la revendication 1, dans lequel le fichier d'animation comprend des graphiques vectoriels, et le procédé comprend en outre:
obtenir (S902) des données de dessin d'animation liées aux graphiques vectoriels, en décodant le fichier d'animation;
effectuer (S904) un rendu hors écran sur les données de dessin d'animation, pour obtenir des données de rendu d'animation;
mettre en cache (S906) les données de rendu d'animation; et
lire (S908) les données de rendu d'animation mises en cache correspondant aux cadres à lire, dans un cas où les cadres à lire sont des cadres d'animation des graphiques vectoriels lors de la lecture du fichier d'animation.

9. Procédé selon la revendication 8, dans lequel la réalisation du rendu hors écran sur les données de dessin d'animation pour obtenir les données de rendu d'animation comprend:
déterminer (S1002) une taille d'un conteneur externe qui est configuré pour afficher les graphiques vectoriels;
déterminer (S1004) un rapport de mise à l'échelle d'une taille des données de dessin d'animation à la taille du conteneur externe;
créer (S1006) un tampon hors écran; et
effectuer (S1008), dans le tampon hors écran, un rendu d'animation sur les données de dessin d'animation en fonction de la taille du conteneur externe et du rapport de mise à l'échelle, pour obtenir les données de rendu d'animation.

10. Procédé selon la revendication 9, dans lequel la détermination du rapport de mise à l'échelle de la taille des données de dessin d'animation à la taille du conteneur externe comprend:
déterminer un premier rapport de taille d'un conteneur interne portant des cadres d'animation par rapport au conteneur externe;
déterminer un deuxième rapport de taille d'une couche d'animation par rapport au conteneur interne;
déterminer un troisième rapport de taille de données de dessin d'animation dans un groupe d'attributs d'éléments dessinables par rapport à la couche d'animation; et
déterminer le rapport de mise à l'échelle en fonction du premier rapport de taille, du deuxième rapport de taille et du troisième rapport de taille.

11. Procédé selon la revendication 10, comprenant en outre:
obtenir le rapport de mise à l'échelle qui est modifié, dans un cas où un rapport correspondant à un noeud dans un arbre de noeuds est modifié, dans lequel l'arbre de noeuds comprend le conteneur externe, le conteneur interne, la couche d'animation, le groupe d'attributs d'éléments dessinables et des données de dessin d'animation dans le groupe d'attributs d'éléments dessinables; et ajuster la taille des données de rendu d'animation mises en cache en fonction du rapport de mise à l'échelle modifié;
ou,
obtenir le rapport de mise à l'échelle qui est entré, et ajuster la taille des données de rendu d'animation mises en cache en fonction du rapport de mise à l'échelle entré.

12. Procédé selon la revendication 8, comprenant en outre:
dans un cas où le fichier d'animation comprend une pluralité de couches d'animation et les couches d'animation comprennent les graphiques vectoriels de différentes tailles,
obtenir (S1102) des données de rendu d'animation des graphiques vectoriels d'une plus grande taille parmi les différentes tailles; et
dans lequel la mise en cache des données de rendu d'animation comprend:
mettre en cache (S1104) les données de rendu d'animation correspondant aux graphiques vectoriels de la plus grande taille.

13. Procédé selon l'une quelconque des revendications 1 à 12, dans lequel après avoir effectué le rendu d'animation selon les données de dessin d'animation initiales qui sont lues, le procédé comprend en outre:
déterminer (S1202), dans un groupe d'attributs pré-composé, une région d'animation comprenant des premières données de rendu d'animation cible, dans un cas où le fichier d'animation comprend le groupe d'attributs pré-composé;
déterminer (S1204) une région d'animation minimale comprenant des deuxièmes données de rendu d'animation cible, dans un cas où une taille d'une région de données de rendu de non-animation comprises dans la région d'animation satisfait à une condition prédéfinie, dans lequel les premières données de rendu d'animation cible sont une partie des deuxièmes données de rendu d'animation cible;
déterminer (S1206) une région de partie chevauchante entre la région d'animation obtenue et la région d'animation minimale; et
déterminer (S1208) la région de partie chevauchante comme étant la région d'animation du groupe d'attributs pré-composé.

14. Support de stockage lisible par ordinateur, stockant un programme informatique, dans lequel le programme informatique, lorsqu'il est exécuté par un processeur, configure le processeur de manière à ce qu'il mette en oeuvre le procédé selon l'une quelconque des revendications 1 à 13.

15. Dispositif informatique comprenant une mémoire et un processeur, dans lequel
la mémoire stocke un programme informatique, et le programme informatique, lorsqu'il est exécuté par le processeur, configure le processeur de manière à ce qu'il mette en oeuvre le procédé selon l'une quelconque des revendications 1 à 13.
